(19) Europäisches Patentamt / European Patent Office / Office européen des brevets

(11) **EP 4 349 617 B1**

(12) **EUROPEAN PATENT SPECIFICATION**

(45) Date of publication and mention
of the grant of the patent:
**02.04.2025 Bulletin 2025/14**

(21) Application number: **23197943.6**

(22) Date of filing: **18.09.2023**

(51) International Patent Classification (IPC):
*B60C 3/04* *(2006.01)* *B60C 11/00* *(2006.01)*
*B60C 11/13* *(2006.01)* *B60C 11/03* *(2006.01)*

(52) Cooperative Patent Classification (CPC):
**B60C 3/04; B60C 11/0008; B60C 11/1307;**
B60C 2011/0025; B60C 2011/0341; B60C 2011/133

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **07.10.2022 JP 2022162226**

(43) Date of publication of application:
**10.04.2024 Bulletin 2024/15**

(73) Proprietor: **Sumitomo Rubber Industries, Ltd.
Kobe-shi, Hyogo 651-0072 (JP)**

(72) Inventor: **IZUMO, Suguru
Kobe-shi, Hyogo, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 4 026 705        WO-A1-2022/025005
WO-A1-2022/025006        WO-A1-2022/045078
WO-A1-2022/074932**

**Description**

TECHNICAL FIELD

The present invention relates to a tire.

BACKGROUND OF THE INVENTION

In recent years, a labeling system based on a grading system has been introduced even for tires for trucks, buses, and the like and, from a viewpoint of aiming for carbon neutrality, there has been an ever-growing demand for fuel-efficient tires.

JP 2005-212742 A discloses a tire for heavy loads, which tire can realize a weight reduction without compromising the tire strength. A tire according to the preamble of claim 1 is known from WO 2022/045078 A1.

Conventionally, with a tire having a large maximum load rating, it has been necessary to suppress deformation of the tire and ensure durability that allows the tire to run without damage.

SUMMARY OF THE INVENTION

On the other hand, with such a tire as described above, there was a problem of increased heat generation and decreased abrasion resistance.

It is an object of the present invention to provide a tire having improved abrasion resistance.

As a result of intensive studies, it was found that, by setting a tire weight W, in kg, and a tire volume V, in $m^3$, to satisfy a predetermined relational expression and by setting $\tan \delta$ at 70°C of the rubber composition constituting the tread to be less than or equal to a predetermined value, a tire having improved abrasion resistance could be obtained.

According to a tire of the present invention, a tire having improved abrasion resistance is provided.

BRIEF DESCRIPTION OF THE DRAWINGS

FIG. 1 is a lateral cross-sectional view of a tread part of a tire according to one embodiment of the present invention.
FIG. 2 is an enlarged cross-sectional view in which is shown a part of a circumferential groove according to one embodiment of the present invention.
FIG. 3 is a lateral cross-sectional view of the tread part of the tire according to another embodiment of the present invention.
FIG. 4 shows a tire cross-sectional width Wt, a tire cross-sectional height Ht, and a tire outer diameter Dt in a cross-sectional view of the tire.

DETAILED DESCRIPTION

The present invention relates to a tire as defined in claim 1.

Although it is not intended to be bound by theory, in the present invention, as the mechanism in which abrasion resistance can be improved, the following can be considered:

In other words, (1) with the ratio of the tire weight to the tire volume being 210 or less, the tire weight relative to the virtual volume of the tire decreases, so that the tire density decreases. The decreased tire density makes the tire more flexible and reduces the applied load on the tread part. By the applied load on the tread part being reduced, the inertia of the tire during rolling and braking of the tire is reduced and the strain of the tread part is reduced. Therefore, the road surface groundability of the tire improves. Moreover, (2) with $\tan \delta$ at 70°C of the rubber composition constituting the tread part being 0.08 or less, heat generation of the rubber composition due to the deformation of the tread part can be suppressed. Since the temperature the tire reaches at the time of travel can be decreased by suppressing heat generation, the breaking strength is maintained at a high level. Therefore, the deformation of the tread part is reduced and the breaking strength of the rubber composition of the tread part is maintained at a high level. Then, it is considered that the notable effect is achieved with the cooperation of (1) and (2) in the above, which notable effect is that abrasion resistance of the tire improves.

Preferably, the rubber composition comprises a filler and a silane coupling agent and the filler comprises silica.

It is considered that since, by the rubber composition comprising silica and the silane coupling agent, silica is firmly bonded with the polymer in the rubber component, the polymer and silica are fixed within the rubber composition, and the energy loss is reduced, abrasion resistance further improves.

Preferably, a filler comprises silica and carbon black, and a content, in parts by mass, of silica based on 100 parts by mass of the rubber component is more than or equal to a content, in parts by mass, of the carbon black based on 100 parts by mass of the rubber component.

It is considered that, since the filler comprises silica and carbon black, the filler is further firmly bonded with the polymer in the rubber component, the polymer and the filler are fixed within the rubber composition, and the energy loss is reduced, abrasion resistance further improves. Moreover, it is considered that since silica can provide the reinforcibility while maintaining the flexibility of the rubber compared to carbon black, by increasing the content of silica to be more than or equal to the content of carbon black, the rubber can easily stretch and follow the deformation with the road surface of the tire, allowing to make it easier to improve the abrasion resistance.

The rubber component preferably comprises a styrene-butadiene rubber.

It is considered that since, with the rubber component comprising the styrene-butadiene rubber, it is made easier for the styrene-butadiene rubber to take in silica and disperse it and silica is further firmly bonded with the polymer in the rubber component, the polymer and silica are fixed within the rubber composition, and the energy loss is reduced, abrasion resistance further improves.

Preferably, the rubber composition comprises a resin component.

It is considered that since the rubber composition comprises the resin component, compatibility between rubber components can be increased while maintaining low heat generation, improving breaking strength and further improving abrasion resistance.

Preferably, the tread part is provided with at least one circumferential groove extending continuously in a tire circumferential direction and at least one groove wall of the circumferential groove is provided with a recessed part being recessed on the outer side of the groove edge appearing on the tread surface of the tread part in a groove width direction.

Since the tread part has the groove as described above, a cavity is formed in the interior of the tread part, the rigidity of the rubber composition constituting the tread is reduced, and the road surface groundability of the tread part improves. Therefore, it is considered that since the force applied to the tread part surface is reduced, abrasion resistance further improves.

A sulfur amount in the rubber composition is preferably 1.2% or more by mass.

It is considered that since the sulfur amount in the rubber composition having the above-described value increases the cross-linking points of the polymer in the rubber component and the polymers are firmly bonded, the energy loss decreases and abrasion resistance further improves.

A total styrene amount S in the rubber component is preferably 12% or less by mass.

It is considered that since the total styrene amount S in the rubber component having the above-described value ensures fracture properties while preventing the styrene portions from generating large agglomerations to form fracture nuclei, abrasion resistance further improves.

The complex elastic modulus at 0°C (0°C E*) of the rubber composition is preferably more than 8.0 MPa.

It is considered that since 0°C E* having the above-described value reduces the tread deformation in the high-frequency region during acceleration, braking, and the like, thereby suppressing the acceleration of wear of the rubber, abrasion resistance further improves.

A rubber hardness Hs of the rubber composition is preferably more than 68.

It is considered that since the rubber hardness having the above-described value makes it possible for the rubber composition of the tread part to obtain good rigidity, abrasion resistance further improves.

The glass transition temperature of the rubber composition is preferably less than -25°C.

It is considered that since the glass transition temperature (Tg) of the rubber composition constituting the tread having the above-described value can maintain the state of the rubber even in the high-frequency region during acceleration, braking, and the like, abrasion resistance further improves.

The total content of the filler based on 100 parts by mass of the rubber component is preferably more than 10 parts by mass and less than 70 parts by mass.

It is considered that since the total content of the filler being within the above-described ranges improves the flexibility and fracture properties of the rubber composition, reduces the load applied to the tread part, and suppresses wear, abrasion resistance further improves.

A filler preferably comprises carbon black having an average primary particle size of 27 nm or less.

It is considered that since the filler comprises carbon black having a predetermined particle size, the rubber component is reinforced, the rubber composition of the tread part can obtain good rigidity, and abrasion resistance further improves.

The ratio of 70°C tan $\delta$ to W (70°C tan $\delta$/W) is preferably more than 0.0009 and less than 0.0050.

It is considered that since the ratio of 70°C tan $\delta$ to W is set to be within the above-described ranges, heat generation of the tread part is suppressed and abrasion resistance further improves.

Preferably, the tread part is provided with at least one circumferential groove extending continuously in a tire circumferential direction, and at least one groove wall of the circumferential groove is provided with a recessed part being recessed on the outer side of the groove edge appearing on the tread surface of the tread part in a groove width direction, and the groove depth of the deepest part of the circumferential groove, which circumferential groove is provided with the recessed part being recessed on the outer side of the groove edge appearing on the tread surface of the tread part in the groove width direction, is more than 8.0 mm and less than 19.0 mm.

It is considered that since space is created in the interior of the tread part and the tread part can dissipate heat efficiently by setting the groove depth of the deepest part of the circumferential groove, which circumferential groove is provided with the recessed part, to be within the above-described ranges, abrasion resistance further improves.

The tire is preferably a tire for heavy loads.

It is considered that, in a case of a vehicle for heavy loads, such as a truck or bus, which vehicle has a large payload, the effects of the present invention are notably manifested.

<Definition>

The "tire weight" is expressed in W, in kg. W is a weight of a single tire, not including a weight of a rim. Moreover, when a noise-suppressing material, a sealant, a sensor, and the like are attached to a tire lumen, W is a value including these weights.

A "standardized rim" is a rim defined for each tire in a standard system including a standard, on which the tire is based, by the standard, for example, it refers to a "standard rim" in an applicable size listed in the "Jatma Year Book" in JATMA (Japan Automobile Tire Manufacturers Association), "Measuring Rim" listed in the "STANDARDS MANUAL" in ETRTO (The European Tyre and Rim Technical Organisation), or "Design Rim" listed in the "YEAR BOOK" in TRA (The Tire and Rim Association, Inc.), and JATMA, ETRTO, and TRA are referred to in that order, and, in a case that there is an applicable size at the time of reference, such a standard is followed. Besides, when a tire is not specified in the standard, the standardized rim refers to, among rims that can be assembled to the tire and can hold the internal pressure, i.e., rims that do not cause air leakage between the rim and the tire, a rim having the smallest rim diameter, followed by that having the narrowest rim width.

A "standardized internal pressure" is an air pressure defined for each tire in a standard system including a standard, on which the tire is based, by the standard, for example, it refers to a "MAXIMUM AIR PRESSURE in JATMA, "INFLATION PRESSURE" in ETRTO, or a maximum value described in Table "TIRE LOAD LIMITS AT VARIOUS COLD INFLATION PRESSURES" in TRA, and JATMA, ETRTO, and TRA are referred to in that order in the same manner as for the standardized rim, and, in a case that there is an applicable size at the time of reference, such a standard is followed. Besides, when a tire is not specified in the standard, it refers to the standardized internal pressure (but 250 kPa or more) of another tire size (but specified in the standard) for which the standardized rim is listed as the standard rim and, when the standardized internal pressure of 250 kPa or more is listed in a plurality, it refers to the smallest value among them.

A "standardized state" is a state where the tire is rim-assembled on a standardized rim, the air is filled at a standardized internal pressure, and no load is applied. Besides, in the present specification, unless otherwise noted, the dimensions of each part of the tire are measured in the standardized state.

The "tire cross-sectional width" is the maximum width between the outer surfaces of sidewalls excluding, if any, patterns or characters on the side surface of the tire when the tire is filled with a predetermined internal pressure. In the present specification, the tire cross-sectional width measured in a standardized state is expressed in $Wt_N$, in mm, and the tire cross-sectional width when the tire is filled at 600 kPa is expressed in Wt, in mm.

The "tire outer diameter" is a tire outer diameter when the tire is filled with a predetermined internal pressure. In the present specification, the tire outer diameter measured in a standardized state is expressed in $Dt_N$, in mm, and the tire outer diameter when the tire is filled at 600 kPa is expressed in Dt, in mm.

The "tire cross-sectional height" is the length being 1/2 of the difference between the tire outer diameter and the rim diameter, which difference is measured when the tire is filled with a standardized internal pressure, and no load is applied. In the present specification, the tire cross-sectional height measured in a standardized state is expressed in $Ht_N$, in mm, and the tire cross-sectional height when the tire is filled at 600 kPa is expressed in Ht, in mm.

In the present specification, a "tire volume" indicates a virtual volume of the tire that can be determined from the outer diameter, the cross-sectional width, and the cross-sectional height of the tire measured when the tire is rim-assembled on a standardized rim and is filled with a predetermined internal pressure, and no load is applied, and can be determined according to the below-described equations (1) and (1'):

$$V=\{(Dt/2)^2-(Dt/2-Ht)^2\}\times\pi\times Wt/10^9\cdots(1)$$

$$V_N=\{(Dt_N/2)^2-(Dt_N/2-Ht_N)^2\}\times\pi\times Wt_N\cdots(1')$$

Besides, in the present specification, the volume when the tire is filled with a standardized internal pressure is expressed in

$V_N$, in mm³, and the tire volume when the tire is measured at the internal pressure of 600 kPa is expressed in V, in m³.

A "standardized load" is a load defined for each tire by the standard and is a maximum load rating in JATMA, a maximum value described in Table "TIRE LOAD LIMITS AT VARIOUS COLD INFLATION PRESSURES" in TRA, or "LOAD CAPACITY" in ETRTO. Besides, in a case of a tire having a size not specified in the standard system, a standardized load $W_{LN}$, in kg, can be estimated according to the below-described equation (2) using the tire volume $V_N$, in mm³, measured in a standardized state:

$$W_{LN} = 0.000011 \times V + 175 \cdots (2)$$

A "circumferential groove" refers to a groove having a groove depth described below of 4.0 mm or more, among grooves extending continuously in a tire circumferential direction.

A "tread ground end (Te)" is a ground position on the outermost side in a tire width direction when the tire is rim-assembled on a standardized rim, is filled at the internal pressure of 600 kPa, and is grounded onto a flat surface at a camber angle of 0 degrees.

A "land part" refers to an area of the tread part being partitioned by circumferential grooves having an opening width on the tread surface of 2.0 mm or more, among circumferential grooves extending continuously at the tread ground end and in a tire circumferential direction. For example, in a case that there are two circumferential grooves, the land part is divided into a pair of shoulder land parts and a center land part sandwiched thereby, and, in a case that there are three circumferential grooves, the center land part is further divided into a land part to be the inner side and a land part to be the outer side of the vehicle at the time of mounting the tire to the vehicle.

A "groove depth of a circumferential groove" is determined according to the distance between an extension line from the groove edge of the uppermost tread surface of the circumferential groove and an extension line from the groove bottom of the circumferential groove. Besides, in a case that the circumferential groove is in a plurality, the groove depth is set to be a groove depth of a circumferential groove having the longest distance between the extension line from the groove edge of the uppermost tread surface of the circumferential groove and the extension line from the groove bottom of the circumferential groove.

The "total styrene amount (S) in the rubber component" is the total content (% by mass) of styrene parts comprised in 100% by mass of the rubber component and is calculated by $\Sigma$ (styrene content of each styrene-containing rubber (% by mass)) $\times$ content in the rubber component of each styrene-containing rubber (% by mass)/100). For example, when the rubber component is composed of 30% by mass of a first SBR (25% by mass of styrene content), 60% by mass of a second SBR (27.5% by mass of styrene content), and 10% by mass of a BR, a total styrene amount (S) in 100% by mass of the rubber component is 24.0% by mass (= 25 × 30/100 + 27.5 × 60/100). Besides, the styrene amount of the styrene-containing rubber is calculated by ¹H-NMR measurement.

<Measuring method>

The "70°C tan $\delta$" is the loss tangent measured under a condition of a temperature at 70°C, a frequency of 10 Hz, an initial strain of 10%, a dynamic strain of $\pm 1\%$, and an elongation mode, using a dynamic viscoelasticity evaluation apparatus (for example, EPLEXOR series manufactured by gabo Systemtechnik GmbH). A sample for measuring the loss tangent is a vulcanized rubber composition with 20 mm in length x 4 mm in width x 1 mm in thickness. When the sample is produced by cutting it out from the tread part of the tire, the length direction is the tire circumferential direction.

A "sulfur amount" is a sulfur amount (% by mass) measured by the oxygen flask combustion method following JIS K 6233:2016. A sample for measuring the sulfur amount is produced in the same manner as in a case of 70°C tan $\delta$.

The "0°C E*" is the complex elastic modulus measured under a condition of a frequency of 10 Hz, a temperature at 0°C, an initial strain of 10%, and a dynamic strain of $\pm 0.25\%$. A sample for measuring the complex elastic modulus is produced in the same manner as in a case of 70°C tan $\delta$.

Concerning the "hardness of the rubber composition", the hardness is measured by cutting out the tread part forming the ground surface of a test tire such that the tire radial direction is the thickness direction, preparing a sample for measuring the hardness, and pressing a type A durometer against the sample from the ground contact surface side at 23°C following JIS K 6253.

Concerning a "glass transition temperature (Tg) of the rubber composition", the temperature distribution curve of tan $\delta$ is measured under a condition of a frequency of 10 Hz, an initial strain of 10%, a dynamic strain of $\pm 0.5\%$, and a temperature-increasing rate of 2°C/min, using a dynamic viscoelasticity evaluation apparatus (for example, EPLEXOR series manufactured by gabo Systemtechnik GmbH), and the temperature corresponding to the greatest tan $\delta$ value (tan $\delta$ peak temperature) in the range of -60°C or more and 40°C or less in the obtained temperature distribution curve is determined to be the glass transition temperature. Besides, in a case that there are at least two points representing the greatest tan $\delta$ value in the range of -60°C or more and 40°C or less, the point with the lowest temperature is set to be the glass transition temperature. Moreover, when the maximum value of tan $\delta$ is -60°C or 40°C, such that the value of tan $\delta$ gradually decreases or increases with a temperature increase in the range of -60°C or more and 40°C or less, for example, the glass transition temperature is determined to be -60°C, 40°C, respectively, following the definition described above. A sample for the present measurement is produced in the same manner as in a case of 0°C tan $\delta$.

A "styrene content" is a value calculated by $^1$H-NMR measurement. For example, it is applied to a styrene-containing rubber such as an SBR.

A "vinyl bond amount (1,2-bond butadiene unit amount)" is measured by infrared absorption spectrometry. For example, it is applied to an SBR, a BR, and the like.

The "glass transition temperature of a rubber component" is a value measured under a condition of a temperature-increasing rate of 10°C/min with the use of a differential scanning calorimeter (Q200), manufactured by TA Instruments, Japan following JIS K 7121. For example, it is applied to an SBR, a BR, and the like.

A "cis-1,4 bond content (cis content)" is a value calculated by infrared absorption spectrometry. For example, it is applied to a BR and the like.

A "weight-average molecular weight" can be determined in terms of a standard polystyrene conversion based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation). For example, it is applied to an SBR, a BR, a resin, a liquid polymer, and the like.

An "$N_2SA$ of carbon black" is measured following JIS K 6217-2 "Carbon black for rubber-Fundamental characteristics-Part 2: Determination of specific surface area-Nitrogen adsorption methods-Single-point procedures".

An "$N_2SA$ of silica" is measured by the BET method following ASTM D 3037-93.

A "softening point" is a temperature at which a sphere drops when the softening point specified in JIS K 6220-1: 2001 is measured with a ring and ball softening point measuring device. For example, it is applied to a resin component and the like.

<Tire>

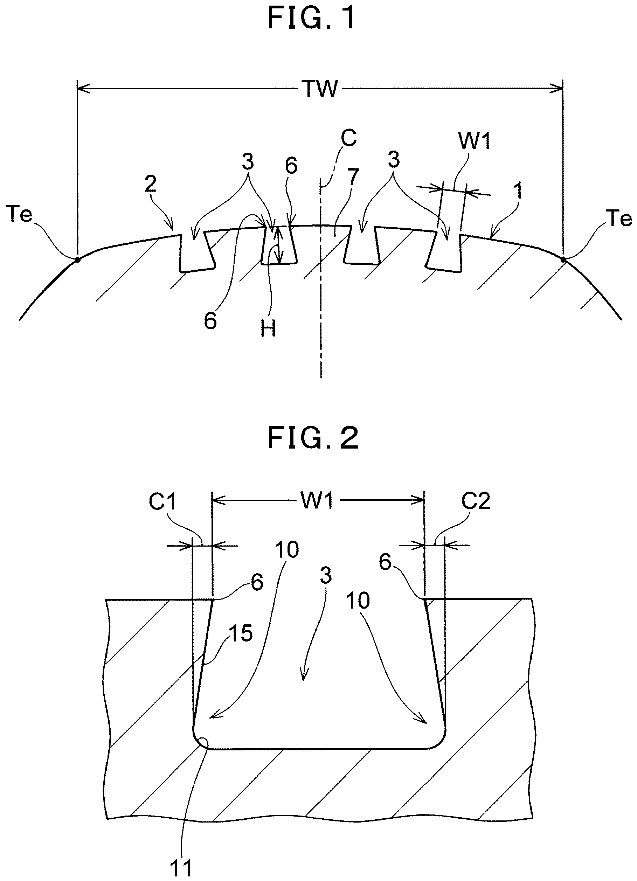

FIGS. 1 to 3 exemplify a tire according to one embodiment of the present invention, but the present invention is not limited thereto. FIGS. 1 to 3 show a part of a tire meridian cross-section. In FIGS. 1 to 3, a vertical direction is a tire radial direction, a horizontal direction is a tire axial direction, and a direction perpendicular to a paper surface is a tire circumferential direction.

[Tread pattern]

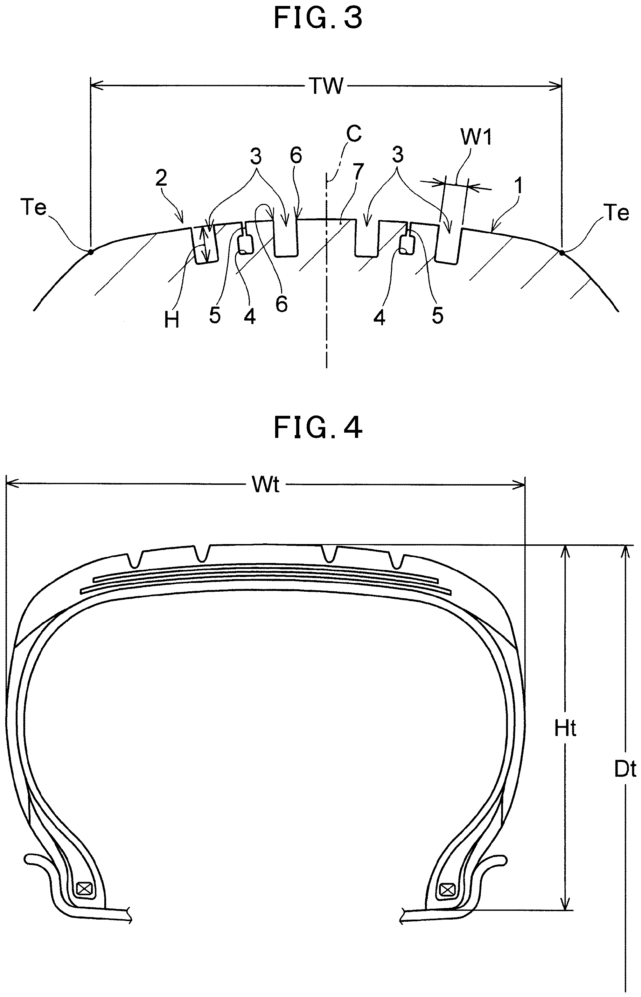

As shown in FIGS. 1 and 3, a tread part 2 is provided with a circumferential groove 3 extending continuously in a tire circumferential direction. In FIG. 1, a total of four circumferential grooves 3 are provided between a tire equator C and each of tread ends Te, but the tread part 2 is not limited to such an embodiment. The tread part 2 has a land part 7 being partitioned by the circumferential grooves 3 in a tire width direction.

In a case that an opening width on the tread surface is 2.0 mm or more, a groove width W1 of each of the circumferential grooves 3 can be set to be 3.0% or more and 15.0% or less of a tread width TW, for example. Besides, in the present specification, a groove width of the circumferential grooves 3 means the length between groove edges appearing on the tread surface of the tread part 2 in the tire meridian cross-section. The tread width TW is the distance in a tire axial direction from one of the tread ends Te to the other of the tread ends Te.

A groove depth H of the circumferential groove 3 is determined according to the distance between an extension line from a groove edge 6 of the uppermost tread surface of the circumferential groove 3 and an extension line from the groove bottom (a deepest part 11) of the circumferential groove. Besides, in a case that the circumferential groove 3 is in a plurality, for example, the groove depth H is set to be a groove depth of a circumferential groove having the longest distance between the extension line from the groove edge of the uppermost tread surface of the circumferential groove and the extension line from the groove bottom of the circumferential groove.

In the present invention, from a viewpoint of the effects of the present invention, the groove depth H of the circumferential groove is preferably more than 8.0 mm, more preferably more than 10.0 mm, further preferably more than 11.0 mm, and particularly preferably more than 12.0 mm. Moreover, from a viewpoint of durability, the groove depth of the circumferential groove is preferably less than 19.0 mm, more preferably less than 18.5 mm, further preferably less than 18.0 mm, and particularly preferably less than 17.5 mm.

In FIG. 1, a groove wall of the circumferential groove 3 is provided with a recessed part being recessed on the outer side of the groove edge 6 appearing on the tread surface of the tread part 2 in a groove width direction. Preferably, in the tread part 2, at least one groove wall of the circumferential groove 3 is provided with a recessed part being recessed on the outer side of the groove edge appearing on the tread surface of the tread part 2 in a groove width direction. The groove depth, in mm, of the deepest part of the circumferential groove in which the recessed part is provided is also determined in the same manner as the groove depth H of the circumferential groove.

In FIG. 2, a groove wall on both sides of the circumferential groove 3 is provided with a recessed part 10 having an amount of recess being constant in the tire circumferential direction. In the recessed part 10, a flat surface 15 is formed between the deepest part 11 and the groove edge 6, for example, but the recessed part 10 is not limited to such an embodiment.

The total amount of recess of the circumferential groove 3 (c1+c2 in FIG. 2) is preferably 0.10 to 5.00 times, more preferably 0.15 to 3.50 times, and further preferably 0.20 to 2.00 times of the groove width W1 of the circumferential groove 3. Besides, in a case that the circumferential groove having the above-mentioned recess part is in a plurality, the above-described relationship can be met by the total amount of recess of any of the circumferential grooves or can be met by all of the circumferential grooves having the recessed part.

The circumferential groove provided with a recessed part being recessed on the outer side of the groove edge 6 appearing on the tread surface of the tread part 2 in a groove width direction can be a circumferential groove combining a sipe, and a sunken groove communicatively connected to the tread surface through the sipe.

When the opening width on the tread surface of the circumferential groove having the recessed part 10 is 2.0 mm or less, the groove width on the inner side in the tire radial direction is preferably more than 2.0 mm. Moreover, when the opening width on the tread surface of the circumferential groove having the recessed part 10 is 2.0 mm or less, the groove width on the inner side in the tire radial direction is preferably 10.0 mm or less.

As shown in FIG. 3, a sunken groove 4 is provided between the circumferential grooves 3, which sunken groove 4 appears when the tread part 2 is worn. In FIG. 3, the sunken groove 4 is communicatively connected to the tread surface through a sipe 5, but it is not limited to such an embodiment, and it can be communicatively connected thereto in a zig-zag or curved manner.

Besides, in the present specification, a notch having the opening width on the uppermost tread part surface, including circumferential and lateral grooves, of less than 2.0 mm is called a "sipe". The opening width of the sipe on the uppermost tread surface is preferably 0.5 mm or more. Moreover, the opening width of the sipe on the uppermost tread surface is preferably 2.0 mm or less.

The groove width W1 of the circumferential groove 3 is constant in the tire radial direction in FIG. 3, but the circumferential groove 3 is not limited to such an embodiment. For example, a groove wall of the circumferential groove 3 can be provided with the recessed part 10 being recessed on the outer side of the groove edge 6 appearing on the tread surface of the tread part 2 in a groove width direction.

In the present invention, from viewpoints of making it easy to deform the tread part and improving groundability, the groove depth of the deepest part of the circumferential groove, which circumferential groove is provided with the recessed part being recessed on the outer side of the groove edge appearing on the tread surface of the tread part in the groove width direction (the circumferential groove provided with the recessed part) is preferably more than 8.0 mm, more preferably more than 9.0 mm, further preferably more than 10.0 mm, further preferably more than 11.0 mm, and particularly preferably more than 12.0 mm. Moreover, from a viewpoint of improving durability, the groove depth of the deepest part of the circumferential groove provided with the recessed part is preferably less than 19.0 mm, more preferably less than 18.5 mm, further preferably less than 18.0 mm, and particularly preferably less than 17.5 mm.

In the tire of the present invention, at least one groove wall of the circumferential groove is preferably provided with a recessed part being recessed on the outer side of the groove edge appearing on the tread surface of the tread part in a groove width direction, and the tire more preferably has a groove composed of a sunken groove that is communicatively connected to the tread surface through a sipe and appears when the tread part is worn, and the sipe.

In the present invention, the tread part 2 has at least one rubber layer. The tread part of the present invention can be a tread part composed of a single rubber layer or can be a tread part having a first rubber layer whose outer surface constitutes a tread surface and one or a plurality of rubber layers being present between the first rubber layer and a belt layer.

The tire weight W (kg) of the tire according to the present invention is preferably 20.0 kg or more, more preferably 40.0 kg or more, and further preferably 60.0 kg or more. Moreover, while the upper limit of the tire weight W (kg) is not particularly restricted, it is normally 100 kg or less.

<<W/V>>

In the present invention, the ratio of the tire weight W (kg) to the tire volume V (m³) is 210 or less, more preferably 208 or less, further preferably 205 or less, particularly preferably 200 or less, and most preferably 190 or less. Moreover, the lower limit of W/V is preferably 100 or more, more preferably 150 or more, and further preferably 160 or more.

The tire weight W can be varied by a normal method. In other words, it can be increased by increasing the specific gravity of the material used or by increasing the thickness of each member of the tire, or vice versa. Moreover, the tire volume V can be varied by a normal method. In other words, it can be varied by adjusting the tire cross-sectional width Wt (mm), tire cross-sectional height Ht (mm), and tire outer diameter Dt (mm).

[Rubber composition]

A rubber composition constituting the tread part of the present invention (below called a rubber composition of the present invention unless otherwise noted) will be described in detail below. When the tread part has two or more rubber layers, the rubber composition of the present invention can be any one of the rubber layers, and is preferably a rubber layer constituting the tread surface.

From viewpoints of suppressing heat generation of the rubber composition due to the deformation of the tread part and improving abrasion resistance, $\tan \delta$ at 70°C (70°C $\tan \delta$) of the rubber composition of the present invention is 0.08 or less and preferably 0.07 or less. Moreover, from a viewpoint of the effects of the present invention, $\tan \delta$ at 70°C of the rubber composition of the present invention is preferably 0.02 or more, more preferably 0.03 or more, and further preferably 0.04 or more.

70°C $\tan \delta$ of the rubber composition can be adjusted by a normal method in the tire industry. For example, 70°C $\tan \delta$ can be increased by using a rubber component having a high glass transition temperature, using a larger amount of the filler, decreasing the particle size, using a larger amount of the resin component as a plasticizer component, or using a smaller amount of sulfur and an accelerator.

In the tire according to the present invention, from a viewpoint of the effects of the present invention, the ratio of 70°C $\tan \delta$ to the tire weight W (70°C $\tan \delta$/W) is preferably less than 0.050, more preferably less than 0.045, and further preferably less than 0.040. Moreover, from a viewpoint of abrasion resistance, 70°C $\tan \delta$/W is preferably more than 0.0009, more preferably more than 0.0012, and further preferably more than 0.0014.

A sulfur amount (% by mass) of the rubber composition of the present invention is, from viewpoints of increasing the cross-linking points of the polymer, decreasing the energy loss, and improving abrasion resistance, preferably 1.2% or more by mass, more preferably 1.3% or more by mass, further preferably 1.4% or more by mass, and particularly preferably 1.6% or more by mass. Moreover, the sulfur amount (% by mass) in the rubber component is, from a viewpoint of the effects of the present invention, preferably 2.3% or less by mass, more preferably 2.2% or less by mass, and further preferably 2.1% or less by mass.

The sulfur amount of the rubber composition can be appropriately adjusted according to the compounding amount of sulfur described below.

From a viewpoint of the effects of the present invention, the total styrene amount S in the rubber component of the rubber composition of the present invention is preferably more than 1.0% by mass, more preferably more than 2.0% by mass, further preferably more than 3.0% by mass, and further preferably more than 4.0% by mass. Moreover, from a viewpoint of ensuring fracture properties of the rubber composition by the styrene groups and improving abrasion performance, the total styrene amount S in the rubber component is 15% or less by mass, more preferably 12% or less by mass, further preferably 10% or less by mass, further preferably 8.0% or less by mass, and particularly preferably 6.0% or less by mass.

From a viewpoint of the effects of the present invention, the complex elastic modulus at 0°C (0°C E*) (MPa) of the rubber composition of the present invention is preferably more than 8.0 MPa, more preferably more than 8.5 MPa, further preferably more than 9.0 MPa, and particularly preferably more than 9.5 MPa. Moreover, from a viewpoint of abrasion resistance, 0°C E* is preferably less than 35 MPa, more preferably less than 30 MPa, further preferably less than 25 MPa, and particularly preferably less than 20 MPa.

0°C E* of the rubber composition can be adjusted by a normal method in the tire industry, and, more specifically, can be appropriately adjusted according to the type and compounding amount of a rubber component, a filler, a silane coupling agent, a resin component, oil, and the like described below. For example, 0°C E* can be increased by using a rubber component having a high glass transition temperature, using a larger amount of the filler, decreasing the particle size, using a larger amount of the resin component as a plasticizer component, using a smaller total amount of a plasticizer, or using a larger amount of sulfur and an accelerator.

From a viewpoint of the effects of the present invention, the rubber hardness Hs of the rubber composition of the present invention is preferably more than 67, more preferably more than 68, further preferably more than 69, and particularly preferably more than 70. Moreover, from a viewpoint of abrasion resistance, the rubber hardness Hs is preferably less than 80, more preferably less than 79, further preferably less than 78, and particularly preferably less than 77.

The rubber hardness of the rubber composition can be adjusted by a normal method in the tire industry, and, more specifically, can be adjusted by changing the type and amount of a chemical (for example, a rubber component, a filler, a resin component, sulfur, a vulcanization accelerator, a silane coupling agent, and the like) compounded in the rubber composition. For example, by using a larger content of oil, the rubber hardness can be decreased, and, conversely, by using a smaller content of oil, the rubber hardness can be increased. Therefore, a person skilled in the art can appropriately adjust the rubber hardness.

From a viewpoint of the effects of the present invention, the glass transition temperature (Tg), in °C, of the rubber composition of the present invention is preferably more than -60°C, more preferably more than -57°C, and further preferably more than -54°C. Moreover, from a viewpoint of abrasion resistance, the glass transition temperature (Tg), in °C, is preferably less than - 25°C, more preferably less than -28°C, and further preferably less than -31°C.

<Rubber component>

The rubber composition according to the present invention comprises a rubber component. The rubber component preferably comprises at least one selected from the group consisting of an isoprene-based rubber, an SBR (styrene-butadiene rubber), and a BR (butadiene rubber), and more preferably comprises the styrene-butadiene rubber. The rubber component can be a rubber component comprising the isoprene-based rubber and the BR, can be a rubber component comprising the isoprene-based rubber and the SBR, or can be a rubber component comprising the isoprene-based rubber, the SBR, and the BR. Moreover, the rubber component can be a rubber component consisting of only the isoprene-based rubber and the BR or can be a rubber component consisting of only the isoprene-based rubber, the SBR, and the BR. Furthermore, for these rubber components, an extended rubber can be used, which extended rubber is pre-extended by a plasticizer component such as oil, a resin, a liquid rubber, and the like described below. When the extended rubber is used as the rubber component, the content of the plasticizer component is preferably 10 parts or more by mass and 50 parts or less by mass based on 100 parts by mass of a rubber solid content.

(Isoprene-based rubbers)

As the isoprene-based rubbers, those common in the tire industry such as an isoprene rubber (IR), a natural rubber, and the like, for example, can be used. In the natural rubber, in addition to a non-modified natural rubber (NR), an epoxidized natural rubber (ENR), a hydrogenated natural rubber (HNR), a deproteinized natural rubber (DPNR), an ultra pure natural rubber, a modified natural rubber including a grafted natural rubber, etc., and the like are also included. These isoprene-based rubbers can be used alone or two or more thereof can be used in combination.

The NR is not particularly limited, and, as the NR, those common in the tire industry such as, for example, SIR20, RSS#3, TSR20, and the like can be used.

The content of the isoprene-based rubber in the rubber component is preferably 20% or more by mass, more preferably 30% or more by mass, further preferably 40% or more by mass, and particularly preferably 50% or more by mass. On the other hand, the content of the isoprene-based rubber in the rubber component is preferably 95% or less by mass, further preferably 90% or less by mass, and particularly preferably 85% or less by mass.

(SBR)

The SBR is not particularly limited, and examples thereof include a solution-polymerized SBR (S-SBR), an emulsion-polymerized SBR (E-SBR), denatured SBRs thereof (a denatured S-SBR, a denatured E-SBR), and the like. Examples of the denatured SBR include an SBR denatured at its terminal and/or main chain, a denatured SBR coupled with tin, a silicon compound, etc. (a denatured SBR of condensate or having a branched structure, etc.), and the like. Moreover, a hydrogenated product of the SBR (a hydrogenated SBR), and the like can also be used. Among them, an S-SBR is preferable and a denatured S-SBR is more preferable.

Examples of the denatured SBR include a denatured SBR into which a functional group commonly used in this field is introduced. Examples of the above-described functional group include, for example, an amino group (preferably an amino group in which a hydrogen atom of the amino group is substituted with a $C_{1-6}$ alkyl group), an amide group, a silyl group, an alkoxysilyl group (preferably a $C_{1-6}$ alkoxysilyl group), an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group (preferably a $C_{1-6}$ alkoxy group), a hydroxyl group, an oxy group, an epoxy group, and the like. Besides, these functional groups can have a substituent. Examples of the substituent include, for example, a functional group such as an amino group, an amide group, an alkoxysilyl group, a carboxyl group, and a hydroxyl group. Moreover, examples of the denatured SBR include a hydrogenated SBR, an epoxidized SBR, a tin-denatured SBR, and the like.

The SBRs listed above can be used alone or two or more thereof can be used in combination. As the SBRs listed above, for example, those manufactured and sold by Sumitomo Chemical Co., Ltd., JSR Corporation, Asahi Kasei Corporation, Zeon Corporation, ZS Elastomer Co., Ltd., for example, can be used.

A styrene content of the SBR is preferably 5% or more by mass and more preferably 10% or more by mass, from a viewpoint of improving fracture properties through interaction between the styrene portions in the tread part while preventing large agglomerations being generated between the styrene portions forming fracture nuclei. Moreover, the styrene content of the SBR is preferably 40% or less by mass, more preferably 35% or less by mass, and further preferably 30% or less by mass. Besides, the styrene content of the SBR is calculated by the above-described measuring method.

A vinyl bond amount of the SBR is preferably 10 mol% or more, more preferably 13 mol% or more, and further preferably 16 mol% or more from viewpoints of ensuring reactivity with silica, rubber strength, and abrasion resistance. Moreover, the vinyl bond amount of the SBR is preferably 70 mol% or less, more preferably 65 mol% or less, and further preferably 60 mol% or less from viewpoints of preventing temperature dependence from increasing, wet grip performance, elongation at break, and abrasion resistance. Besides, the vinyl bond amount (1,2-bond butadiene unit amount) of the SBR is calculated by the above-described measuring method.

From a viewpoint of abrasion resistance, the weight-average molecular weight (Mw) of the SBR is preferably 150,000 or more, more preferably 200,000 or more, and further preferably 250,000. Moreover, from viewpoints of cross-linking uniformity and the like, the Mw is preferably 2,500,000 or less and more preferably 2,000,000 or less. Besides, the Mw is measured by the above-described measuring method.

When the rubber composition comprises the SBR, a content of the SBR in 100% by mass of the rubber component is preferably 5% or more by mass, more preferably 10% or more by mass, further preferably 15% or more by mass, and particularly preferably 20% or more by mass, from a viewpoint of the effects of the present invention. Moreover, from viewpoints of preventing phase separation with an isoprene-based rubber and ensuring fracture properties, it is preferably 70% or less by mass, more preferably 60% or less by mass, further preferably 50% or less by mass, and particularly preferably 45% or less by mass.

(BR)

The BR is not particularly limited, and those commonly used in the tire industry can be used, such as, for example, a BR having a cis-1,4 bond content (cis content) of 90% or more (a high cis BR), a rare-earth-based butadiene rubber synthesized using a rare earth element-based catalyst (a rare-earth-based BR), a BR containing a syndiotactic polybutadiene crystal (an SPB-containing BR), a denatured BR (a high cis denatured BR, a low cis denatured BR), and the like. Examples of the denatured BR include a BR denatured with a functional group or the like similar to that described in the SBRs above.

As the high cis BR, those manufactured by Zeon Corporation, those manufactured by Ube Industries, Ltd., those manufactured by JSR Corporation, and the like can be used, for example. When the high cis BR is comprised, low-temperature characteristics and abrasion resistance can be improved. The cis content is preferably 95% or more, more preferably 96% or more, and further preferably 97% or more. This cis content of 98% or more is also preferable. Besides, in the present specification, the cis content is a value calculated by infrared absorption spectrometry.

As the rare-earth-based BR, those synthesized using a rare earth element-based catalyst and having a vinyl bond amount (1,2-bond butadiene unit amount) of preferably 1.8 mol% or less, more preferably 1.0 mol% or less, and further preferably 0.8 mol% or less, and a cis content (cis-1,4 bond content) of preferably 95 mol% or more, more preferably 96 mol% or more, and further preferably 97 mol% or more can be used. As the rare-earth-based BR, those manufactured by LANXESS, etc., for example, can be used.

Examples of the SPB-containing BR include those in which a 1,2-syndiotactic polybutadiene crystal is chemically bonded with the BR and dispersed, but not those in which the crystal is simply dispersed in the BR. As such an SPB-comprising BR, those manufactured by Ube Industries, Ltd., etc., can be used.

As the denatured BR, a denatured butadiene rubber (denatured BR) denatured with a functional group comprising at least one element selected from the group consisting of silicon, nitrogen, and oxygen at its terminal and/or main chain is suitably used.

Examples of the other denatured BRs include those obtained by polymerizing 1,3-butadiene with a lithium initiator and then adding a tin compound, and in which a denatured BR molecule is bonded by a tin-carbon bond at its terminal (a tin-denatured BR), and the like. Moreover, the denatured BR can be either hydrogenated or not hydrogenated.

The BRs listed above can be used alone or two or more thereof can be used in combination.

A weight-average molecular weight (Mw) of the BR is preferably 300,000 or more, more preferably 350,000 or more, and further preferably 400,000 or more, from a viewpoint of abrasion resistance. Moreover, it is preferably 2,000,000 or less, and more preferably 1,000,000 or less, from viewpoints of cross-linking uniformity and the like. Besides, the Mw is measured by the above-described measuring method.

When the rubber composition comprises the BR, a content of the BR in 100% by mass of the rubber component is preferably 5% or more by mass, more preferably 10% or more by mass, and further preferably 15% or more by mass, from a viewpoint of abrasion resistance. Moreover, from a viewpoint of wet grip performance, it is preferably 50% or less by mass, more preferably 40% or less by mass, further preferably 35% or less by mass, and particularly preferably 30% or less by mass.

(Other rubber components)

As the rubber component according to the present invention, rubber components other than the above-described isoprene-based rubbers, SBRs, and BRs can be contained. As other rubber components, a cross-linkable rubber component commonly used in the tire industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components can be used alone or two or more thereof can be used in combination.

<Filler>

The rubber composition according to the present invention comprises a filler. It preferably comprises silica as a filler, and more preferably comprises carbon black and silica. Moreover, the filler can be a filler consisting of carbon black and silica.

(Silica)

Silica is not particularly limited, and those common in the tire industry can be used, such as, for example, silica prepared by a dry process (anhydrous silica), silica prepared by a wet process (hydrous silica), and the like. Among them, hydrous silica prepared by a wet process is preferable from the reason that it has many silanol groups. Such silica can be used alone or two or more thereof can be used in combination. Moreover, from a viewpoint of life cycle assessment, in addition to silica described above, biomass silica made from a biomass material such as rice husk can be used by equivalently replacing silica described above appropriately.

A nitrogen adsorption-specific surface area ($N_2SA$) of silica is preferably 140 $m^2$/g or more, more preferably 150 $m^2$/g or more, further preferably 160 $m^2$/g or more, and particularly preferably 170 $m^2$/g or more, from viewpoints of reinforcing properties and securing damping in the tread part. Moreover, it is preferably 350 $m^2$/g or less, more preferably 300 $m^2$/g or less, and further preferably 250 $m^2$/g or less, from viewpoints of heat generation and processability. The $N_2SA$ of silica is measured by the above-described measuring method.

Average primary particle size of silica is preferably 22 nm or less, more preferably 20 nm or less, and further preferably 18 nm or less. The lower limit of average primary particle size is not particularly limited and is preferably 1 nm or more, more preferably 3 nm or more, and further preferably 5 nm or more. It is considered that, when an average primary particle size of silica is within the above-described ranges, the dispersibility of silica can be further improved, and the reinforcibility, fracture properties, and abrasion resistance can be improved. The average primary particle size of silica can be determined by the above-described measuring method.

When the rubber composition comprises silica, a content of silica based on 100 parts by mass of the rubber component is preferably more than 10 parts by mass, more preferably more than 15 parts by mass, further preferably more than 18 parts by mass, and particularly preferably more than 20 parts by mass, from a viewpoint of the reinforcibility. Moreover, it is preferably less than 80 parts by mass, more preferably less than 75 parts by mass, further preferably less than 70 parts by mass, and further preferably less than 65 parts by mass, from viewpoints of reducing the specific gravity of rubber and realizing a weight reduction and viewpoints of making the rubber more flexible and improving abrasion resistance.

(Carbon black)

Carbon black is not particularly limited, and those common in the tire industry can be used, such as GPF, FEF, HAF, ISAF, SAF, and the like, or specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be suitably used, and, besides these, an in-house synthetic product, and the like can also be suitably used. These carbon blacks can be used alone or two or more thereof can be used in combination. Moreover, in addition to carbon black made from mineral oil and the like, biomass-derived carbon black obtained by burning lignin and the like, or recycled carbon black purified by pyrolyzing a rubber product containing carbon black, such as a tire and the like, can be used by equivalently replacing these appropriately.

A nitrogen adsorption-specific surface area ($N_2SA$) of carbon black is preferably 50 $m^2$/g or more, more preferably 80 $m^2$/g or more, and further preferably 100 $m^2$/g or more, from viewpoints of weather resistance and reinforcing properties. Moreover, from viewpoints of dispersibility, fuel efficiency, fracture properties, and durability, the $N_2SA$ is preferably 250 $m^2$/g or less and more preferably 220 $m^2$/g or less. Besides, the $N_2SA$ of carbon black in the present specification is determined by the above-described measuring method.

Average primary particle size of carbon black is preferably 27 nm or less, more preferably 25 nm or less, and further preferably 23 nm or less. Moreover, the average primary particle size is preferably 10 nm or more, more preferably 12 nm or more, and further preferably 15 nm or more. It is considered that since the rubber component can be reinforced and good rigidity can be obtained when the average primary particle size of carbon black is within the above-described ranges, abrasion resistance further improves. Average primary particle size of carbon black can be determined by the above-described measuring method.

When the rubber composition comprises carbon black, the content thereof based on 100 parts by mass of the rubber component is preferably more than 10 parts by mass, more preferably more than 20 parts by mass, and further preferably more than 30 parts by mass, from viewpoints of reinforcing the rubber component and obtaining good rigidity. Moreover, from a viewpoint of suppressing heat generation of the tread part, it is preferably less than 80 parts by mass, more preferably less than 70 parts by mass, and further preferably less than 60 parts by mass.

(The other fillers)

As fillers other than silica and carbon black, those commonly used conventionally in the tire industry can be compounded, such as aluminum hydroxide, calcium carbonate, alumina, clay, talc, biochar, a short fiber material such as a cellulose nanofiber, and the like, can be used.

The total content of the filler based on 100 parts by mass of the rubber component is preferably less than 90 parts by mass, more preferably less than 85 parts by mass, and further preferably less than 75 parts by mass, from viewpoints of suppressing heat generation and enhancing the improvement effects of abrasion resistance. Moreover, from a viewpoint of the reinforcibility, it is preferably more than 20 parts by mass, more preferably more than 25 parts by mass, further preferably more than 30 parts by mass, and further preferably more than 35 parts by mass.

A content of silica in total 100% by mass of silica and carbon black is preferably 10% or more by mass, more preferably 25% or more by mass, further preferably 40% or more by mass, further preferably 50% or more by mass, particularly preferably 50% or more by mass, and most preferably 60% or more by mass. Moreover, the content of silica is preferably 90% or less by mass, more preferably 80% or less by mass, and particularly preferably 70% or less by mass.

(Silane coupling agent)

Silica is preferably used in combination with a silane coupling agent. The silane coupling agent is not particularly limited, examples thereof include, for example, sulfide-based silane coupling agents such as bis(3-triethoxysilylpropyl) disulfide and bis(3-triethoxysilylpropyl)tetrasulfide; mercapto-based silane coupling agents such as 3-mercaptopropyltrimethoxysilane, NXT-Z100, NXT-Z45, NXT, and the like manufactured by Momentive Performance Materials; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycydoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like, and, among them, sulfide-based silane coupling agents are preferable. These silane coupling agents can be used alone or two or more thereof can be used in combination.

When the rubber composition comprises the silane coupling agent, a content thereof based on 100 parts by mass of silica is preferably more than 1.0 parts, more preferably more than 3.0 parts by mass, and further preferably more than 5.0 parts, from a viewpoint of enhancing the dispersibility of silica. Moreover, from a viewpoint of preventing a decrease in abrasion resistance, it is preferably less than 30 parts by mass, more preferably less than 20 parts by mass, and further preferably less than 15 parts by mass.

<Plasticizer>

The rubber composition according to the present invention preferably comprises a plasticizer. The plasticizer is a material to impart plasticity to a rubber component, and the concept includes both a liquid plasticizer at room temperature (25°C) and a solid plasticizer at room temperature (25°C). Examples of the plasticizer specifically include oil, a liquid polymer, an ester-based plasticizer, a resin component, and the like, for example. The plasticizers can be used alone or two or more thereof can be used in combination. Besides, in the present specification, the plasticizer also includes a plasticizer contained in an extended rubber.

(Oil)

Examples of oil include, for example, process oil, vegetable oil and fat, animal oil and fat, and the like. Examples of process oil include a paraffin-based process oil, a naphthene-based process oil, an aromatic-based process oil, and the like. Moreover, as an environmental measure, a process oil having a low content of a polycyclic aromatic compound (PCA) can be used. Examples of the process oil having a low content of a PCA include a treated distillate aromatic extract (TDAE), which is an aromatic-based process oil being reextracted; an aromatic substitute oil being a mixed oil of asphalt and naphthenic oil; mild extraction solvates (MES); a heavy naphthenic oil, and the like. Moreover, from a viewpoint of life cycle assessment, lubricating oil used in a rubber mixer or an engine, and purified waste cooking oil used in restaurants can be used by equivalently replacing the oil described above appropriately.

When the rubber composition comprises the oil, the content thereof based on 100 parts by mass of the rubber component is preferably more than 1 parts by mass, more preferably more than 2 parts by mass, and further preferably more than 3 parts by mass, from the viewpoint of processability. Moreover, the content is preferably less than 80 parts by mass, more preferably less than 60 parts by mass, and further preferably less than 40 parts by mass, from viewpoints of fuel efficiency and durability. Besides, in the present specification, the content of oil also includes an amount of oil contained in an oil-extended rubber.

(Liquid polymer)

The liquid polymer is not particularly limited as long as it is a polymer in a liquid state at normal temperature (25°C), and examples thereof include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. The liquid polymers can be used alone or two or more thereof can be used in combination.

(Ester-based plasticizer)

Examples of the ester-based plasticizer include, for example, dibutyl adipate (DBA), diisobutyl adipate (DIBA), dioctyl adipate (DOA), di2-ethylhexyl azelate (DOZ), dibutyl sebacate (DBS), diisononyl adipate. (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizers can be used alone or two or more thereof can be used in combination.

(Resin component)

Preferably, the rubber composition according to the present invention further comprises a resin component. The resin component is not particularly limited, and examples thereof include a petroleum resin, a terpene-based resin, a rosin-based resin, a phenol-based resin, and the like being commonly used in the tire industry. These resin components can be used alone or two or more thereof can be used in combination.

Examples of the petroleum resin include a C5-based petroleum resin, an aromatic-based petroleum resin, and a C5-C9-based petroleum resin, for example. These petroleum resins can be used alone or two or more thereof can be used in combination.

The C5-based petroleum resin refers to a resin obtained by polymerizing a C5 fraction. Examples of the C5 fraction include, for example, a petroleum fraction equivalent to 4 to 5 carbon atoms, such as cyclopentadiene, pentene, pentadiene, isoprene, and the like. As the C5-based petroleum resin, a dicyclopentadiene resin (DCPD resin) is suitably used.

The aromatic-based petroleum resin refers to a resin obtained by polymerizing a C9 fraction and can be hydrogenated or denatured. Examples of the C9 fraction include, for example, a petroleum fraction equivalent to 8 to 10 carbon atoms, such as vinyltoluene, alkylstyrene, indene, methyl indene, and the like. As specific examples of the aromatic-based petroleum resin, for example, a coumarone indene resin, a coumarone resin, an indene resin, and an aromatic vinyl-based resin are suitably used. As the aromatic vinyl-based resin, a homopolymer of α-methylstyrene or styrene, or a copolymer of α-methylstyrene and styrene is preferable, and a copolymer of α-methylstyrene and styrene is more preferable, because it is economical, easy to be processed, and good in heat generation. As the aromatic vinyl-based resin, for example, those commercially available from Kraton Corporation, Eastman Chemical Company, etc. can be used.

The C5-C9-based petroleum resins refer to resins obtained by copolymerizing the C5 fraction and the C9 fraction and can be those obtained by hydrogenating or denaturing them. Examples of the C5 fraction and the C9 fraction include the petroleum fractions described previously. As the C5-C9-based petroleum resins, for example, products commercially available from Tosoh Corporation, Zibo Luhua Hongjin New Material Co., Ltd., etc., can be suitably used.

Examples of the terpene-based resin include a polyterpene resin consisting of at least one selected from terpene compounds such as α-pinene, β-pinene, limonene, and dipentene; an aromatic-denatured terpene resin made from the terpene compound and an aromatic compound; a terpene phenol resin made from a terpene compound and a phenol-based compound; and those obtainable by hydrogenating these terpene-based resins (hydrogenated terpene-based resins). Examples of the aromatic compound used as raw material for the aromatic-denatured terpene resin include, for

13

example, styrene, $\alpha$-methylstyrene, vinyltoluene, divinyltoluene, and the like. Examples of the phenol-based compound used as raw material for the terpene phenol resin include, for example, phenol, bisphenol A, cresol, xylenol, and the like.

The rosin-based resin is not particularly limited, and examples thereof include, for example, a natural resin rosin, a rosin denatured resin, and the like, the rosin denatured resin being the natural resin rosin denatured by hydrogenation, disproportionation, dimerization, or esterification.

The phenol-based resin is not particularly limited, and examples thereof include a phenolformaldehyde resin, an alkylphenolformaldehyde resin, an alkylphenol acetylene resin, an oil-denatured phenolformaldehyde resin, and the like.

A softening point of the resin component is preferably 60°C or higher and more preferably 65°C or higher, from a viewpoint of grip performance. Moreover, it is preferably 150°C or lower, more preferably 140°C or lower, and further preferably 130°C or lower, from viewpoints of processability and improvement in the dispersibility of a rubber component with a filler. Besides, in the present specification, the softening point can be defined as the temperature at which a sphere drops when the softening point specified in JIS K 6220-1: 2001 is measured with a ring and ball softening point measuring device.

As the resin component, from viewpoints of obtaining abrasion resistance, durability, and wet grip performance in a well-balanced manner, the aromatic-based petroleum resin is preferable and the aromatic vinyl-based resin is more preferable.

When the rubber composition comprises the resin component, the content of thereof based on 100 parts by mass of the rubber component is, from a viewpoint of the effects of the present invention, preferably more than 1.0 parts by mass, more preferably more than 1.5 parts by mass, and further preferably more than 2.0 parts by mass. Moreover, it is preferably less than 50 parts by mass, more preferably less than 40 parts by mass, further preferably less than 30 parts by mass, and particularly preferably less than 20 parts by mass, from a viewpoint of durability.

<The other compounding agent>

The rubber composition according to the present invention can appropriately comprise compounding agents commonly used conventionally in the tire industry, such as, for example, wax, a processing aid, an antioxidant, stearic acid, zinc oxide, a vulcanizing agent such as sulfur, a vulcanization accelerator, and the like, in addition to the previously-described components.

When the rubber composition comprises the wax, the content thereof based on 100 parts by mass of the rubber component is, from a viewpoint of weather resistance of a rubber, preferably more than 0.5 parts by mass and more preferably more than 1 parts by mass. Moreover, it is preferably less than 20 parts by mass and more preferably less than 15 parts by mass, from a viewpoint of preventing whitening of a tire due to bloom.

As the processing aids, fatty acid metal salts aimed at lowering the viscosity of unvulcanized rubber and securing mold-releasing properties, those widely available commercially as compatibilizers from a viewpoint of suppressing the micro-layer separation of the rubber component, and the like can be used.

When the rubber composition comprises the processing aid, the content thereof based on 100 parts by mass of the rubber component is, from a viewpoint of exhibiting the improvement effects of processability, preferably more than 0.5 parts by mass and more preferably more than 1 parts by mass. Moreover, it is preferably less than 10 parts by mass and more preferably less than 8 parts by mass, from viewpoints of abrasion resistance and breaking strength.

The antioxidant is not particularly limited, and examples thereof include, for example, an antioxidant such as each amine-based, quinoline-based, quinone-based, phenol-based, and imidazole-based compound, and a carbamate metal salt.

When the rubber composition comprises the antioxidant, the content thereof based on 100 parts by mass of the rubber component is, from the viewpoint of ozone crack resistance of a rubber, preferably more than 0.5 parts by mass and more preferably more than 1 parts by mass. Moreover, it is preferably less than 10 parts by mass and more preferably less than 5 parts by mass, from viewpoints of abrasion resistance and wet grip performance.

When the rubber composition comprises the stearic acid, the content thereof based on 100 parts by mass of the rubber component is, from a viewpoint of processability, preferably more than 0.5 parts by mass and more preferably more than 1 parts by mass. Moreover, it is preferably less than 10 parts by mass and more preferably less than 5 parts by mass, from a viewpoint of vulcanization rate.

When the rubber composition comprises the zinc oxide, the content thereof based on 100 parts by mass of the rubber component is, from a viewpoint of processability, preferably more than 0.5 parts by mass, more preferably more than 1.0 parts by mass, and further preferably more than 1.5 parts by mass. Moreover, it is preferably less than 10.0 parts by mass and more preferably less than 5.0 parts by mass, from a viewpoint of abrasion resistance.

(Vulcanizing agent)

Sulfur is suitably used as the vulcanizing agent. As sulfur, a powdered sulfur, an oil-treated sulfur, a precipitated sulfur, a colloidal sulfur, an insoluble sulfur, a highly dispersible sulfur, and the like can be used.

When the rubber composition comprises sulfur as the vulcanizing agent, a content of sulfur based on 100 parts by mass of the rubber component is preferably more than 0.1 parts by mass, more preferably more than 0.3 parts by mass, and further preferably more than 0.5 parts by mass, from a viewpoint of securing a sufficient vulcanization reaction. Moreover, the content is preferably less than 3.0 parts by mass, more preferably less than 1.5 parts by mass, further preferably 1.25 parts or less by mass, and further preferably 1 parts or less by mass from a viewpoint of preventing deterioration. Besides, the content of the vulcanizing agent when an oil-containing sulfur is used as the vulcanizing agent is to be the total content of pure sulfur amounts comprised in the oil-containing sulfur.

Examples of vulcanizing agents other than sulfur include, for example, alkylphenol-sulfur chloride condensate, 1,6-hexamethylene-sodium dithiosulfate dehydrate, 1,6-bis(N, N'-dibenzylthiocarbamoyldithio)hexane, and the like. As these vulcanizing agents other than sulfur, those commercially available from Taoka Chemical Co., Ltd., LANXESS, Flexsys, etc. can be used.

(Vulcanization accelerator)

Examples of the vulcanization accelerators include sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, for example. These vulcanization accelerators can be used alone or two or more thereof can be used in combination. Among them, one or more vulcanization accelerators to be selected from the group consisting of sulfenamide-based, guanidine-based, and thiazole-based vulcanization accelerators are preferable, and the sulfenamide-based vulcanization accelerators are more preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N, N-dicyclohexyl-2-benzothiazolylsulfenamide (DCBS), and the like. Among them, N-cyclohexyl-2-benzothiazolylsulfenamide (CBS) is preferable.

Examples of the guanidine-based vulcanization accelerator include 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like, for example. Among them, 1,3-diphenylguanidine (DPG) is preferable.

Examples of the thiazole-based vulcanization accelerator include 2-mercaptobenzothiazole, a cyclohexylamine salt of 2-mercaptobenzothiazole, di-2-benzothiazolyl disulfide, and the like, for example. Among them, 2-mercaptobenzothiazole is preferable.

When the rubber composition comprises the vulcanization accelerator, the content thereof based on 100 parts by mass of the rubber component is preferably more than 1.0 parts by mass, and more preferably 1.25 parts or more by mass. Moreover, the content of the vulcanization accelerator based on 100 parts by mass of the rubber component is preferably less than 8.0 parts by mass, more preferably less than 6.0 parts by mass, and further preferably less than 3.0 parts or less by mass. When the content of the vulcanization accelerators is within the above-described ranges, there is a tendency to be able to secure breaking strength and elongation.

<Manufacturing>

The rubber composition according to the present invention can be manufactured by a known method. For example, it can be manufactured by kneading each of the previously-described components using a rubber kneading apparatus such as an open roll, a closed type kneader (Bunbury mixer, kneader, and the like), and the like.

The kneading step comprises, for example, a base kneading step of kneading compounding agents and additives other than vulcanizing agents and vulcanization accelerators, and a final kneading (F kneading) step of adding vulcanizing agents and vulcanization accelerators to the kneaded product obtained in the base kneading step and kneading them. Furthermore, the base kneading step can be divided into a plurality of steps, if desired. Kneading conditions are not particularly limited, and, for example, a method of kneading at a discharge temperature of 150 to 170°C for 3 to 10 minutes in the base kneading step and kneading at 70 to 110°C for 1 to 5 minutes in the final kneading step is exemplified.

[Tire]

The tire comprising the tread composed of the above-described rubber composition can be manufactured by a usual method. In other words, the tire can be manufactured by extruding, from unvulcanized rubber compositions, in which each of the above-described components is compounded to the rubber component as required, the above-described rubber composition into the shape of at least one rubber layer constituting the tread, attaching them with other tire members on a tire molding machine, and molding them by a usual method to form an unvulcanized tire, followed by heating and pressurizing this unvulcanized tire in a vulcanizing machine. Vulcanization conditions are not particularly limited, and, for example, a method of vulcanizing at 150 to 200°C for 10 to 30 minutes is exemplified.

[Application]

The tire according to the present invention is a tire having a tread, can be either a pneumatic tire or a non-pneumatic tire, and can be suitably used as the pneumatic tire. Moreover, the tire according to the present invention can be used for various applications such as a tire for a passenger car, a tire for heavy loads, such as a truck/bus tire, a tire for a motorcycle, a high-performance tire, and the like, and is suitably used as the tire for heavy loads in particular. Besides, the tire for heavy loads refers to a tire with a standardized load of 1,400 kg or more.

EXAMPLE

Examples considered to be preferable in implementation (Examples) are shown below, but the scope of the present invention is not to be limited to the Examples.
Tires having treads consisting of rubber compositions obtained according to Tables 1 to 6 using various chemicals shown below were examined, and results calculated based on various analysis and evaluation methods are shown below.

NR: TSR20
SBR: SOL R C2525 (S-SBR, styrene content: 26% by mass, vinyl content: 24 mol%, Tg: -50°C, Mw: 600,000), manufactured by Versalis S.p.A.
BR: UBEPOL BR (registered trademark) 150B (cis content: 97%, Tg: -108°C, Mw: 440,000), manufactured by Ube Industries, Ltd.
Carbon black 1: Show Black N134 ($N_2SA$: 148 $m^2$/g, average primary particle size: 18 nm), manufactured by Cabot Japan K.K.
Carbon black 2: Show Black N220 ($N_2SA$: 115 $m^2$/g, average primary particle size: 22 nm), manufactured by Cabot Japan K.K.
Silica: Ultrasil VN3 ($N_2SA$: 175 $m^2$/g, average primary particle size: 18 nm), manufactured by Evonik Degussa GmbH
Silane coupling agent: Si266 (bis(3-triethoxysilylpropyl)disulfide), manufactured by Evonik Degussa GmbH
Resin component: SYLVARES SA85 (a copolymer of $\alpha$-methylstyrene and styrene, softening point: 85°C), manufactured by Kraton Corporation
Oil: Vivatec 500 (TDAE oil), manufactured by H&R Group
Wax: Sunnock N, manufactured by Ouchi Shinko Chemical Industrial Co., Ltd.
Antioxidant: Antigen 6C (N-(1,3-dimethylbutyl)-N'-phenyl-p-phenylenediamine), manufactured by Sumitomo Chemical Co., Ltd.
Zinc oxide: Zinc oxide No. 1, manufactured by Mitsui Mining & Smelting Co., Ltd.
Stearic acid: Stearic acid "Tsubaki", manufactured by NOF CORPORATION
Sulfur: HK-200-5 (5% oil-containing powdered sulfur), manufactured by Hosoi Chemical Industry Co., Ltd.
Vulcanization accelerator 1: Nocceler CZ (N-cyclohexyl-2-benzothiazolylsulfenamide (CBS)), manufactured by Ouchi Shinko Chemical Industry Co., Ltd.
Vulcanization accelerator 2: Nocceler D (1,3-diphenylguanidine (DPG)), manufactured by Ouchi Shinko Chemical Industry Co., Ltd.

(Examples and Comparative Examples)

According to the compounding formulations shown in Tables 1 to 6, using a 1.7 L closed Banbury mixer, chemicals other than sulfur and vulcanization accelerators are kneaded for 1 to 10 minutes until a discharge temperature reaches 150 to 160°C to obtain a kneaded product. Next, using a twin-screw open roll, sulfur and vulcanization accelerators are added to the obtained kneaded product, and the mixture is kneaded for 4 minutes until the temperature reaches 105°C to obtain an unvulcanized rubber composition. The unvulcanized rubber composition is press-vulcanized at 170°C for 12 minutes to produce a test rubber composition.
The unvulcanized rubber composition having the compounding formulations shown in Tables 1 to 6 is used as the tread part, is extruded to a thickness of 18mm using an extruder equipped with a mouthpiece having a predetermined shape, and is attached with tire members other than the tread to form an unvulcanized tire, and the unvulcanized tire is press-vulcanized under a condition of 170°C for 12 minutes to manufacture and prepare Test tire 1 (size: 315/80R22.5 156/150L, rim: 22.5x9.00J), Test tire 2 (size: 225/80R17.5 123/122L, rim: 17.5x6.00J), and Test tire 3 (size: 385/65R22.5 164K, rim: 22.5x11.75J), respectively.

Besides, "a groove depth, in mm, of the deepest part of a circumferential groove provided with a recessed part" in Tables 1 to 6 refers to the distance between an extension line from the groove edge of the uppermost tread surface of a circumferential groove provided with a recessed part and an extension line from the groove bottom (a deepest part) of the circumferential groove.

Evaluations described below are carried out for the test rubber composition and the test tire. Besides, the tire weight W, in kg, and virtual volume V, in $m^3$, are values calculated from the tire cross-sectional width Wt, in mm, tire cross-sectional height Ht, in mm, and tire outer diameter Dt, in mm, of each of the tires when the tire is filled with air at 600 kPa.

<Measurement of 70°C tan $\delta$>

For each of the vulcanized rubber test pieces prepared by cutting out from the tread part of each of the test tires with 20 mm in length x 4 mm in width x 1 mm in thickness so that the tire circumferential direction is the long side, tan $\delta$ is measured under a condition of a temperature at 70°C, a frequency of 10 Hz, an initial strain of 5%, and a dynamic strain of $\pm1\%$, using a dynamic viscoelasticity evaluation apparatus (EPLEXOR series manufactured by gabo Systemtechnik GmbH).

<Measurement of 0°C E*>

For the test piece prepared in the same manner as that for 70°C tan $\delta$, E* is measured under a condition of a frequency of 10 Hz, a temperature at 0°C, an initial strain of 10%, and a dynamic strain of $\pm2.5\%$, using a dynamic viscoelasticity evaluation apparatus (EPLEXOR series manufactured by gabo Systemtechnik GmbH).

<Measurement of rubber hardness (Hs)>

The shore hardness (Hs) of each of the rubber test pieces is measured at a temperature of 23°C using a type A durometer following JIS K 6253-3: 2012. Besides, for the respective rubber test pieces, those cut out from the tread part of the respective test tires are used.

<Measurement of glass transition temperature (Tg)>

For the test piece prepared in the same manner as that for 70°C tan $\delta$, the temperature distribution curve of loss tangent tan $\delta$ is measured under a condition of a frequency of 10 Hz, an initial strain of 10%, a dynamic strain of $\pm0.5\%$, and a temperature-increasing rate of 2°C/min, using a dynamic viscoelasticity evaluation apparatus (EPLEXOR series manufactured by gabo Systemtechnik GmbH), and the temperature corresponding to the greatest tan $\delta$ value (tan $\delta$ peak temperature) in the obtained temperature distribution curve is determined to be the glass transition temperature (Tg). Besides, the thickness direction of a sample is set to be the tire radial direction.

<Evaluation of abrasion resistance>

Each of the test tires is filled with air at 600 kPa and is mounted on all wheels of a truck (2-D vehicle) with a maximum loading capacity of 10 tons, the groove depth of the tire tread part after traveling 30,000 km on a road surface paved with asphalt is measured, and the distance traveled when the groove depth decreases by 1 mm is determined. Results are shown as an index using the following calculation formula, where 100 is the distance traveled when the groove depth of the tire of the reference Comparative Example (Comparative Example 7 in Tables 1 and 2, Comparative Example 12 in Tables 3 and 4, and Comparative Example 16 in Tables 5 and 6) decreases by 1 mm:

(Abrasion resistance index) = (Distance traveled when the groove depth of the tire of each of the compounding examples decreases by 1 mm) / (Distance traveled when the groove depth of the tire of Comparative Example 1 decreases by 1 mm) x 100

The results show that the higher the index, the better the abrasion resistance.

Table 1 (Tire size 315/80R22.5)

| | | Example | | | | | | | | |
|---|---|---|---|---|---|---|---|---|---|---|
| | | 1 | 2 | 3 | 4 | 5 | 6 | 7 | 8 | 9 |
| Compounding amount (parts by mass) | NR | 80 | 80 | 80 | 80 | 80 | 80 | 80 | 80 | 80 |
| | SBR | - | - | 20 | 20 | 20 | - | 20 | 20 | 20 |
| | BR | 20 | 20 | - | - | - | 20 | - | - | - |
| | Carbon black 1 | 45 | 25 | 25 | 25 | 25 | 45 | 25 | - | 20 |
| | Carbon black 2 | - | - | - | - | - | - | - | 25 | - |
| | Silica | - | 25 | 25 | 25 | 25 | - | 25 | 25 | 30 |
| | Silane coupling agent | - | 2.5 | 2.5 | 2.5 | 2.5 | - | 2.5 | 2.5 | 3.0 |
| | Resin component | - | - | - | 10 | 10 | - | 10 | 10 | 10 |
| | Oil | - | - | - | - | - | - | 2.0 | - | - |
| | Wax | 1.5 | 1.5 | 1.5 | 1.5 | 1.5 | 1.5 | 1.5 | 1.5 | 1.5 |
| | Antioxidant | 1.5 | 1.5 | 1.5 | 1.5 | 1.5 | 1.5 | 1.5 | 1.5 | 1.5 |
| | Zinc oxide | 3.0 | 3.0 | 3.0 | 3.0 | 3.0 | 3.0 | 3.0 | 3.0 | 3.0 |
| | Stearic acid | 3.0 | 3.0 | 3.0 | 3.0 | 3.0 | 3.0 | 3.0 | 3.0 | 3.0 |
| | Sulfur | 1.5 | 1.5 | 1.5 | 1.5 | 1.5 | 1.5 | 1.5 | 1.5 | 1.5 |
| | Vulcanization accelerator 1 | 1.0 | 1.0 | 1.0 | 1.0 | 1.0 | 1.0 | 1.0 | 1.0 | 1.0 |
| | Vulcanization accelerator 2 | - | 0.5 | 0.5 | 0.5 | 0.5 | - | 0.5 | 0.5 | 0.5 |
| Physical properties | 70°C tan δ | 0.07 | 0.08 | 0.07 | 0.08 | 0.08 | 0.07 | 0.08 | 0.07 | 0.06 |
| | 0°C E* | 14.0 | 13.0 | 11.0 | 10.0 | 10.0 | 14.0 | 9.0 | 9.0 | 9.5 |
| | Rubber hardness Hs | 68 | 68 | 68 | 67 | 67 | 68 | 67 | 67 | 67 |
| | Glass transition temperature (°C) | -52 | -52 | -50 | -48 | -48 | -52 | -48 | -48 | -48 |

(continued)

|  |  | Example | | | | | | | | |
|---|---|---|---|---|---|---|---|---|---|---|
|  |  | 1 | 2 | 3 | 4 | 5 | 6 | 7 | 8 | 9 |
| Tire | Tire size | 315/80R 22.5 | 315/80 R22.5 | 315/80R 22.5 | 315/80R 22.5 | 315/80R 22.5 | 315/80R 22.5 | 315/80R 22.5 | 315/80R 22.5 | 315/80R 22.5 |
|  | W (kg) | 42.8 | 43.0 | 42.8 | 42.8 | 42.5 | 38.5 | 42.5 | 43.0 | 42.5 |
|  | V (m$^3$) | 0.205 | 0.205 | 0.205 | 0.205 | 0.205 | 0.205 | 0.205 | 0.205 | 0.205 |
|  | Sunken groove | None | None | None | None | Present | None | None | None | None |
|  | Groove depth (mm) of deepest part of circumferential groove provided with recessed part | 15 | 15 | 15 | 15 | 15 | 15 | 15 | 15 | 15 |
| Sulfur amount (% by mass) | | 1.21 | 1.33 | 1.33 | 1.25 | 1.25 | 1.21 | 1.24 | 1.21 | 42.5 |
| Total styrene amount (% by mass) in rubber component | | 0 | 0 | 5.2 | 5.2 | 5.2 | 0 | 5.2 | 5.2 | 5.2 |
| W/V | | 208.8 | 209.8 | 208.8 | 208.8 | 207.3 | 187.8 | 207.3 | 209.8 | 207.3 |
| 70°C tan $\delta$/W | | 0.0016 | 0.0019 | 0.0016 | 0.0019 | 0.0019 | 0.0018 | 0.0019 | 0.0016 | 0.0014 |

|  | Example | | | | | | | | |
|---|---|---|---|---|---|---|---|---|---|
|  | 1 | 2 | 3 | 4 | 5 | 6 | 7 | 8 | 9 |
| Abrasion resistance | 106 | 112 | 116 | 126 | 132 | 116 | 124 | 118 | 130 |

Table 2 (Tire size 315/80R22.5)

| | | | | | Comparative Example | | | | |
|---|---|---|---|---|---|---|---|---|---|
| | | 1 | 2 | 3 | 4 | 5 | 6 | 7 | 8 |
| Compounding amount (parts by mass) | NR | 80 | 80 | 80 | 80 | 80 | 80 | 80 | 80 |
| | SBR | - | - | - | - | 20 | 20 | 20 | - |
| | BR | 20 | 20 | 20 | 20 | - | - | - | 20 |
| | Carbon black 1 | 50 | 45 | 50 | 25 | 25 | 25 | 25 | 50 |
| | Silica | - | - | - | 25 | 25 | 25 | 25 | - |
| | Silane coupling agent | - | - | - | 2.5 | 2.5 | 2.5 | 2.5 | - |
| | Resin component | - | - | - | - | - | 10 | 10 | - |
| | Oil | - | - | - | - | - | - | - | - |
| | Wax | 1.5 | 1.5 | 1.5 | 1.5 | 1.5 | 1.5 | 1.5 | 1.5 |
| | Antioxidant | 1.5 | 1.5 | 1.5 | 1.5 | 1.5 | 1.5 | 1.5 | 1.5 |
| | Zinc oxide | 3.0 | 3.0 | 3.0 | 3.0 | 3.0 | 3.0 | 3.0 | 3.0 |
| | Stearic acid | 3.0 | 3.0 | 3.0 | 3.0 | 3.0 | 3.0 | 3.0 | 3.0 |
| | Sulfur | 1.5 | 1.5 | 1.5 | 1.5 | 1.5 | 1.5 | 1.5 | 1.5 |
| | Vulcanization accelerator 1 | 1.0 | 1.0 | 1.0 | 1.0 | 1.0 | 1.0 | 1.0 | 1.0 |
| | Vulcanization accelerator 2 | - | - | - | - | - | 0.5 | 0.5 | - |
| Physical properties | 70°C tan δ | 0.09 | 0.07 | 0.09 | 0.08 | 0.07 | 0.08 | 0.08 | 0.09 |
| | 0°C E* | 15.0 | 14.0 | 15.0 | 13.0 | 11.0 | 10.0 | 10.0 | 15.0 |
| | Rubber hardness | 69 | 68 | 69 | 68 | 68 | 67 | 67 | 69 |
| | Glass transition temperature (°C) | -52 | -52 | -52 | -52 | -50 | -48 | -48 | -52 |
| Tire | Tire size | 315/80R22.5 | 315/80R22.5 | 315/80R22.5 | 315/80R22.5 | 315/80R22.5 | 315/80R22.5 | 315/80R22.5 | 315/80R22.5 |
| | W (kg) | 54.8 | 55.4 | 50.5 | 55.4 | 55.4 | 55.4 | 55.4 | 43.0 |
| | V (m³) | 0.205 | 0.205 | 0.205 | 0.205 | 0.205 | 0.205 | 0.205 | 0.205 |
| Tire | Sunken groove | None | None | None | None | None | None | Present | None |
| | Groove depth (mm) of deepest part of circumferential groove provided with recessed part | 15 | 15 | 15 | 15 | 15 | 15 | 15 | 15 |

20

(continued)

| | Comparative Example | | | | | | | |
|---|---|---|---|---|---|---|---|---|
| | 1 | 2 | 3 | 4 | 5 | 6 | 7 | 8 |
| Sulfur amount (% by mass) | 1.19 | 1.21 | 1.19 | 1.33 | 1.33 | 1.25 | 1.25 | 1.19 |
| Total styrene amount (% by mass) in rubber component | 0 | 0 | 0 | 0 | 5.2 | 5.2 | 5.2 | 0 |
| W/V | 267.3 | 270.2 | 246.3 | 270.2 | 270.2 | 270.2 | 270.2 | 209.8 |
| 70°C tan $\delta$/W | 0.0016 | 0.0013 | 0.0018 | 0.0014 | 0.0013 | 0.0014 | 0.0014 | 0.0021 |
| Abrasion resistance | 90 | 94 | 94 | 98 | 96 | 98 | 100 | 96 |

Table 3 (Tire size 225/80R17.5)

| | | Example | | |
|---|---|---|---|---|
| | | 10 | 11 | 12 |
| Compounding amount (parts by mass) | NR | 80 | 80 | 80 |
| | SBR | - | 20 | 20 |
| | BR | 20 | - | - |
| | Carbon black 1 | 45 | 25 | 25 |
| | Silica | - | 25 | 25 |
| | Silane coupling agent | - | 2.5 | 2.5 |
| | Resin component 1 | - | - | 10 |
| | Oil | - | - | - |
| | Wax | 1.5 | 1.5 | 1.5 |
| | Antioxidant | 1.5 | 1.5 | 1.5 |
| | Zinc oxide | 3.0 | 3.0 | 3.0 |
| | Stearic acid | 3.0 | 3.0 | 3.0 |
| | Sulfur | 1.5 | 1.5 | 1.5 |
| | Vulcanization accelerator 1 | 1.0 | 1.0 | 1.0 |
| | Vulcanization accelerator 2 | - | - | 0.5 |
| Physical properties | 70°C tan $\delta$ | 0.07 | 0.07 | 0.08 |
| | 0°C E* | 14.0 | 11.0 | 10.0 |
| | Rubber hardness | 68 | 68 | 67 |
| | Glass transition temperature (°C) | -52 | -50 | -48 |
| Tire | Tire size | 225/80R17.5 | 225/80R17.5 | 225/80R17.5 |
| | W (kg) | 16.0 | 16.5 | 16.5 |
| | V (m$^3$) | 0.079 | 0.079 | 0.079 |
| | Sunken groove | None | None | None |
| | Groove depth (mm) of deepest part of circumferential groove provided with recessed part | 15 | 15 | 15 |
| Sulfur amount (% by mass) | | 1.21 | 1.33 | 1.25 |
| Total styrene amount (% by mass) in rubber component | | 0 | 5.2 | 5.2 |

| | Example | | |
|---|---|---|---|
| | 10 | 11 | 12 |
| W/V | 202.5 | 208.9 | 208.9 |
| 70°C tan $\delta$/W | 0.0044 | 0.0042 | 0.0048 |
| Abrasion resistance | 108 | 116 | 128 |

Table 4 (Tire size 225/80R17.5)

| | | Comparative Example | | | | |
|---|---|---|---|---|---|---|
| | | 9 | 10 | 11 | 12 | 13 |
| Compounding amount (parts by mass) | NR | 80 | 80 | 80 | 80 | 80 |
| | SBR | - | - | 20 | 20 | - |
| | BR | 20 | 20 | - | - | 20 |
| | Carbon black 1 | 50 | 45 | 25 | 25 | 50 |
| | Silica | - | - | 25 | 25 | - |
| | Silane coupling agent | - | - | 2.5 | 2.5 | - |
| | Resin component | - | - | - | 10 | - |
| | Oil | - | - | - | - | - |
| | Wax | 1.5 | 1.5 | 1.5 | 1.5 | 1.5 |
| | Antioxidant | 1.5 | 1.5 | 1.5 | 1.5 | 1.5 |
| | Zinc oxide | 3.0 | 3.0 | 3.0 | 3.0 | 3.0 |
| | Stearic acid | 3.0 | 3.0 | 3.0 | 3.0 | 3.0 |
| | Sulfur | 1.5 | 1.5 | 1.5 | 1.0 | 1.5 |
| | Vulcanization accelerator 1 | 1.0 | 1.0 | 1.0 | 1.0 | 1.0 |
| | Vulcanization accelerator 2 | - | - | - | 0.5 | - |
| Physical properties | 70°C tan $\delta$ | 0.09 | 0.07 | 0.07 | 0.08 | 0.09 |
| | 0°C E* | 15.0 | 14.0 | 11.0 | 10.0 | 15.0 |
| | Rubber hardness | 69 | 68 | 68 | 67 | 69 |
| | Glass transition temperature (°C) | -52 | -52 | -50 | -48 | -52 |
| Tire | Tire size | 225/80R17.5 | 225/80R17.5 | 225/80R17.5 | 225/80R17.5 | 225/80R17.5 |
| | W (kg) | 21.5 | 23.4 | 23.4 | 23.4 | 16.5 |
| | V (m$^3$) | 0.079 | 0.079 | 0.079 | 0.079 | 0.079 |
| | Sunken groove | None | None | None | None | None |
| | Groove depth (mm) of deepest part of circumferential groove provided with recessed part | 15 | 15 | 15 | 15 | 15 |
| Sulfur amount (% by mass) | | 1.19 | 1.21 | 1.33 | 1.25 | 1.19 |
| Total styrene amount (% by mass) in rubber component | | 0 | 0 | 5.2 | 5.2 | 0 |
| | | Comparative Example | | | | |
| | | 9 | 10 | 11 | 12 | 13 |
| W/V | | 272.2 | 296.2 | 296.2 | 296.2 | 208.9 |

(continued)

| | Comparative Example | | | | |
|---|---|---|---|---|---|
| | 9 | 10 | 11 | 12 | 13 |
| 70°C tan $\delta$/W | 0.0042 | 0.0030 | 0.0030 | 0.0034 | 0.0055 |
| Abrasion resistance | 96 | 98 | 98 | 98 | 100 |

Table 5 (Tire size 385/65R22.5)

| | | Example | | |
|---|---|---|---|---|
| | | 13 | 14 | 15 |
| Compounding amount (parts by mass) | NR | 80 | 80 | 80 |
| | SBR | | 20 | 20 |
| | BR | 20 | - | - |
| | Carbon black 1 | 45 | 25 | 25 |
| | Silica | - | 25 | 25 |
| | Silane coupling agent | - | 2.5 | 2.5 |
| | Resin component | - | - | 10 |
| | Oil | - | - | - |
| | Wax | 1.5 | 1.5 | 1.5 |
| | Antioxidant | 1.5 | 1.5 | 1.5 |
| | Zinc oxide | 3.0 | 3.0 | 3.0 |
| | Stearic acid | 3.0 | 3.0 | 3.0 |
| | Sulfur | 1.5 | 1.5 | 1.5 |
| | Vulcanization accelerator 1 | 1.0 | 1.0 | 1.0 |
| | Vulcanization accelerator 2 | - | 0.5 | 0.5 |
| Physical properties | 70°C tan $\delta$ | 0.07 | 0.07 | 0.08 |
| | 0°C E* | 14.0 | 11.0 | 10.0 |
| | Rubber hardness | 68 | 68 | 67 |
| | Glass transition temperature (°C) | -52 | -50 | -48 |
| Tire | Tire size | 385/65R22.5 | 385/65R22.5 | 385/65R22.5 |
| | W (kg) | 52.0 | 52.1 | 51.9 |
| | V (m$^3$) | 0.249 | 0.249 | 0.249 |
| | Sunken groove | None | None | None |
| | Groove depth (mm) of deepest part of circumferential groove provided with recessed part | 15 | 15 | 15 |
| Sulfur amount (% by mass) | | 1.21 | 1.33 | 1.25 |
| Total styrene amount (% by mass) in rubber component | | 0 | 5.2 | 5.2 |

| | Example | | |
|---|---|---|---|
| | 13 | 14 | 15 |
| W/V | 208.8 | 209.2 | 208.4 |
| 70°C tan $\delta$/W | 0.0013 | 0.0013 | 0.0015 |
| Abrasion resistance | 108 | 118 | 130 |

Table 6 (Tire size 385/65R22.5)

| | | Comparative Example | | | |
|---|---|---|---|---|---|
| | | 14 | 15 | 16 | 17 |
| Compounding amount (parts by mass) | NR | 80 | 80 | 80 | 80 |
| | SBR | - | 20 | 20 | - |
| | BR | 20 | - | - | 20 |
| | Carbon black 1 | 45 | 25 | 25 | 50 |
| | Silica | - | 25 | 25 | - |
| | Silane coupling agent | - | 2.5 | 2.5 | - |
| | Resin component | - | - | 10 | - |
| | Oil | - | - | - | - |
| | Wax | 1.5 | 1.5 | 1.5 | 1.5 |
| | Antioxidant | 1.5 | 1.5 | 1.5 | 1.5 |
| | Zinc oxide | 3.0 | 3.0 | 3.0 | 3.0 |
| | Stearic acid | 3.0 | 3.0 | 3.0 | 3.0 |
| | Sulfur | 1.5 | 1.5 | 1.5 | 1.5 |
| | Vulcanization accelerator 1 | 1.0 | 1.0 | 1.0 | 1.0 |
| | Vulcanization accelerator 2 | - | - | - | - |
| Physical properties | 70°C tan $\delta$ | 0.07 | 0.07 | 0.08 | 0.09 |
| | 0°C E* | 14.0 | 11.0 | 10.0 | 14.0 |
| | Rubber hardness | 68 | 68 | 67 | 68 |
| | Glass transition temperature (°C) | -52 | -50 | -48 | -52 |
| Tire | Tire size | 385/65R22.5 | 385/65R22.5 | 385/65R22.5 | 385/65R22.5 |
| | W (kg) | 64.1 | 62.5 | 64.1 | 52.1 |
| | V (m$^3$) | 0.249 | 0.249 | 0.249 | 0.249 |
| | Sunken groove | None | None | None | None |
| | Groove depth (mm) of deepest part of circumferential groove provided with recessed part | 15 | 16 | 17 | 15 |
| Sulfur amount (% by mass) | | 1.21 | 1.33 | 1.25 | 1.19 |
| Total styrene amount (% by mass) in rubber component | | 0 | 5.2 | 5.2 | 0 |

| | Comparative Example | | | |
|---|---|---|---|---|
| | 14 | 15 | 16 | 17 |
| W/V | 257.4 | 251.0 | 257.4 | 209.2 |
| 70°C tan $\delta$/W | 0.0011 | 0.0011 | 0.0012 | 0.0013 |
| Abrasion resistance | 94 | 98 | 100 | 98 |

REFERENCE SIGNS LIST

1. Tire
2. Tread part
3. Circumferential groove
4. Sunken groove
5. Sipe
6. Groove edge
7. Land part
10. Recessed part
11. Deepest part
15. Flat surface
TW. Tread width
TE. Tread end
W. Groove width
Wt. Tire cross-sectional width
Ht. Tire cross-sectional height
Dt. Tire outer diameter

**Claims**

1. A tire (1) comprising a tread part (2),

   wherein the tread part (2) is composed of a rubber composition comprising a rubber component,
   wherein the tire weight is defined as W, in kg, and W is a weight of a single tire, not including a weight of a rim,
   wherein, when a noise-suppressing material, a sealant, a sensor, and the like are attached to a tire lumen, W is a value including these weights, and the tire volume measured at the internal pressure of 600 kPa when no load is applied is defined as V, in $m^3$, **characterized in that** tan $\delta$ at 70°C of the rubber composition is 0.08 or less, wherein the tan $\delta$ at 70°C is the loss tangent measured under a condition of a temperature at 70°C, a frequency of 10 Hz, an initial strain of 10%, and a dynamic strain of $\pm 1\%$, and
   W/V is 210 or less, preferably 200 or less, more preferably 190 or less.

2. The tire (1) of claim 1, wherein the rubber composition comprises a filler and a silane coupling agent and the filler comprises silica.

3. The tire (1) of claim 1 or 2, wherein a filler comprises silica and carbon black, and a content, in parts by mass, of the silica based on 100 parts by mass of the rubber component is more than or equal to a content, in parts by mass, of the carbon black based on 100 parts by mass of the rubber component.

4. The tire (1) of any one of claims 1 to 3, wherein the rubber component comprises a styrene-butadiene rubber.

5. The tire (1) of any one of claims 1 to 4, wherein the rubber composition comprises a resin component.

6. The tire (1) of any one of claims 1 to 5, wherein the tread part (2) is provided with at least one circumferential groove (3) extending continuously in a tire circumferential direction and at least one groove wall of the circumferential groove (3) is provided with a recessed part (10) being recessed on the outer side of the groove edge (6) appearing on the tread surface of the tread part (2) in a groove width direction.

7. The tire (1) of any one of claims 1 to 6, wherein a sulfur amount of the rubber composition is 1.2% or more by mass.

8. The tire (1) of any one of claims 1 to 7, wherein a total styrene amount S in the rubber component is 12% or less by mass.

9. The tire (1) of any one of claims 1 to 8, wherein the complex elastic modulus at 0°C (0°C E*) of the rubber composition is more than 8.0 MPa.

10. The tire (1) of any one of claims 1 to 9, wherein a rubber hardness Hs of the rubber composition is more than 68, wherein the hardness is measured by a type A durometer at 23°C following JIS K 6253.

11. The tire (1) of any one of claims 1 to 10, wherein the glass transition temperature of the rubber composition is less than -25°C, wherein a temperature distribution curve of tan $\delta$ is measured under a condition of a frequency of 10 Hz, an initial strain of 10%, a dynamic strain of $\pm 0.5\%$, and a temperature-increasing rate of 2°C/min, and the temperature corresponding to the greatest tan $\delta$ value in the range of -60°C or more and 40°C or less in the obtained temperature distribution curve is determined to be the glass transition temperature.

12. The tire (1) of any one of claims 1 to 11, wherein the total content of the filler based on 100 parts by mass of the rubber component is more than 10 parts by mass and less than 70 parts by mass.

13. The tire (1) of any one of claims 1 to 12, wherein a filler comprises carbon black having an average primary particle size of 27 nm or less.

14. The tire (1) of any one of claims 1 to 13, wherein the ratio of 70°C tan $\delta$ to W (70°C tan $\delta$/W) is more than 0.0009 and less than 0.0050.

15. The tire (1) of any one of claims 1 to 14, wherein the tread part (2) is provided with at least one circumferential groove (3) extending continuously in a tire circumferential direction, and at least one groove wall of the circumferential groove (3) is provided with a recessed part (10) being recessed on the outer side of the groove edge (6) appearing on the tread surface of the tread part (2) in a groove width direction, and the groove depth of the deepest part (11) of the circumferential groove (3), which circumferential groove (3) is provided with the recessed part (10) being recessed on the outer side of the groove edge (6) appearing on the tread surface of the tread part (2) in the groove width direction, is more than 8.0 mm and less than 19.0 mm.

**Patentansprüche**

1. Reifen (1), umfassend einen Laufstreifenteil (2),

   wobei der Laufstreifenteil (2) mit einer Kautschukzusammensetzung aufgebaut ist, die eine Kautschukkomponente umfasst,
   wobei das Reifengewicht als W, in kg, definiert ist, und W ein Gewicht eines einzelnen Reifens ist, welches kein Gewicht einer Felge enthält, wobei, wenn ein geräuschdämpfendes Material, ein Dichtmittel, ein Sensor und dergleichen an einem Reifen-Lumen angebracht sind, W ein Wert ist, der diese Gewichte enthält, und das bei dem Innendruck von 600 kPa, wenn keine Last aufgebracht ist, gemessene Reifenvolumen als V, in $m^3$, definiert ist,

   **dadurch gekennzeichnet, dass** tan $\delta$ bei 70°C der Kautschukzusammensetzung 0,08 oder weniger beträgt, wobei der tan $\delta$ bei 70°C der unter Bedingungen einer Temperatur von 70°C, einer Frequenz von 10 Hz, einer anfänglichen Dehnung von 10% und einer dynamischen Dehnung von $\pm 1\%$ gemessene Verlusttangens ist, und
   W/V 210 oder weniger beträgt, bevorzugt 200 oder weniger, bevorzugter 190 oder weniger.

2. Reifen (1) nach Anspruch 1, wobei die Kautschukzusammensetzung einen Füllstoff und ein Silan-Kopplungsmittel umfasst, und der Füllstoff Siliziumdioxid umfasst.

3. Reifen (1) nach Anspruch 1 oder 2, wobei ein Füllstoff Siliziumdioxid und Ruß umfasst, und ein Gehalt, in Massenteilen, des Siliziumdioxids bezogen auf 100 Massenteile der Kautschukkomponente mehr als ein oder gleich einem Gehalt, in Massenteilen, des Rußes bezogen auf 100 Massenteile der Kautschukkomponente ist.

4. Reifen (1) nach einem der Ansprüche 1 bis 3, wobei die Kautschukkomponente einen Styrol-Butadien-Kautschuk umfasst.

5. Reifen (1) nach einem der Ansprüche 1 bis 4, wobei die Kautschukzusammensetzung eine Harzkomponente umfasst.

6. Reifen (19 nach einem der Ansprüche 1 bis 5, wobei der Laufstreifenteil (2) mit mindestens einer Umfangsrille (3) versehen ist, die sich durchgehend in einer Reifenumfangsrichtung erstreckt, und mindestens eine Rillenwand der Umfangsrille (3) mit einem zurückversetzten Teil (10) versehen ist, der auf der äußeren Seite der Rillenkante (6), die auf der Laufstreifenoberfläche des Laufstreifenteils (2) erscheint, in einer Rillenbreitenrichtung zurückversetzt ist.

7. Reifen (1) nach einem der Ansprüche 1 bis 6, wobei eine Schwefelmenge der Kautschukzusammensetzung 1,2 Massen-% oder mehr beträgt.

8. Reifen (1) nach einem der Ansprüche 1 bis 7, wobei eine gesamte Styrolmenge S in der Kautschukkomponente 12 Massen-% oder weniger beträgt.

9. Reifen (1) nach einem der Ansprüche 1 bis 8, wobei der komplexe Elastizitätsmodul bei 0°C (0°C E*) der Kautschukzusammensetzung mehr als 8,0 MPa beträgt.

10. Reifen (1) nach einem der Ansprüche 1 bis 9, wobei eine Kautschukhärte Hs der Kautschukzusammensetzung mehr als 68 beträgt, wobei die Härte durch ein Typ-A-Durometer bei 23°C unter Befolgung von JIS K 6253 gemessen ist.

11. Reifen (1) nach einem der Ansprüche 1 bis 10, wobei die Glasübergangstemperatur der Kautschukzusammensetzung weniger als -25°C beträgt, wobei eine Temperaturverteilungskurve von tan $\delta$ unter Bedingungen einer Frequenz von 10 Hz, einer anfänglichen Dehnung von 10%, einer dynamischen Dehnung von $\pm 0,5\%$ und einer Temperaturanstiegsrate von 2°C/min gemessen ist, und bestimmt ist, dass die Temperatur, die dem größten tan $\delta$-Wert in dem Bereich von -60°C oder mehr und 40°C oder weniger in der erhaltenen Temperaturverteilungskurve entspricht, die Glasübergangstemperatur ist.

12. Reifen (1) nach einem der Ansprüche 1 bis 11, wobei der gesamte Gehalt des Füllstoffes bezogen auf 100 Massenteile der Kautschukkomponente mehr als 10 Massenteile und weniger als 70 Massenteile beträgt.

13. Reifen (1) nach einem der Ansprüche 1 bis 12, wobei ein Füllstoff Ruß umfasst, der eine mittlere Primärpartikelgröße von 27 nm oder weniger aufweist.

14. Reifen (1) nach einem der Ansprüche 1 bis 13, wobei das Verhältnis von 70°C tan $\delta$ zu W (70°C tan $\delta$/W) mehr als 0,0009 und weniger als 0,0050 beträgt.

15. Reifen (1) nach einem der Ansprüche 1 bis 14, wobei der Laufstreifenteil (2) mit mindestens einer Umfangsrille (3) versehen ist, die sich durchgehend in einer Reifenumfangsrichtung erstreckt, und mindestens eine Rillenwand der Umfangsrille (3) mit einem zurückversetzten Teil (10) versehen ist, der auf der äußeren Seite der Rillenkante (6), die auf der Laufstreifenoberfläche des Laufstreifenteils (2) erscheint, in einer Rillenbreitenrichtung zurückversetzt ist, und die Rillentiefe des tiefsten Teils (11) der Umfangsrille (3), welche Umfangsrille (3) mit dem zurückversetzten Teil (10) versehen ist, der auf der äußeren Seite der Rillenkante (6), die auf der Laufstreifenoberfläche des Laufstreifenteils (2) erscheint, in der Rillenbreitenrichtung zurückversetzt ist, mehr als 8,0 mm und weniger als 19,0 mm beträgt.

**Revendications**

1. Pneumatique (1) comprenant une partie bande de roulement (2),

   dans lequel la partie bande de roulement (2) est composée d'une composition de caoutchouc comprenant un composant de caoutchouc,
   dans lequel le poids de pneumatique est défini par W, en kg, et W est le poids d'un seul pneumatique, n'incluant pas le poids d'une jante, dans lequel, lorsqu'un matériau insonorisant, un agent d'étanchéité, un capteur ou similaire sont fixés sur une lumière de pneumatique, W est une valeur incluant ces poids, et le volume de pneumatique mesuré à la pression intérieure de 600 kPa, lorsqu'aucune charge n'est appliquée, est défini par V, en m³,
   **caractérisé en ce que** la tan $\delta$ à 70 °C de la composition de caoutchouc est inférieure ou égale à 0,08, où la tan $\delta$ à 70 °C est la tangente de perte mesurée dans une condition de température de 70 °C, une fréquence de 10 Hz, une contrainte initiale de 10 % et une contrainte dynamique de $\pm$ 1%, et
   W/V est inférieur ou égal à 210, de préférence inférieur ou égal à 200, plus préférentiellement inférieur ou égal à 190.

2. Pneumatique (1) selon la revendication 1, dans lequel la composition de caoutchouc comprend une charge et un agent de couplage silane et la charge comprend de la silice.

3. Pneumatique (1) selon la revendication 1 ou la revendication 2, dans lequel une charge comprend de la silice et du noir de carbone, et une teneur, en parties en masse, de silice sur la base de 100 parties en masse de composant de caoutchouc, est égale ou supérieure à une teneur, en parties en masse, de noir de carbone sur la base de 100 parties en masse de composant de caoutchouc.

4. Pneumatique (1) selon l'une quelconque des revendications 1 à 3, dans lequel le composant de caoutchouc comprend un caoutchouc styrène butadiène.

5. Pneumatique (1) selon l'une quelconque des revendications 1 à 4, dans lequel la composition de caoutchouc comprend un composant résine.

6. Pneumatique (1) selon l'une quelconque des revendications 1 à 5, dans lequel la partie bande de roulement (2) est pourvue d'au moins une rainure circonférentielle (3) s'étendant de manière continue dans une direction circonférentielle de pneumatique et au moins une paroi de rainure de la rainure circonférentielle (3) est pourvue d'une partie en retrait (10) étant en retrait sur le côté extérieur du bord de rainure (6) apparaissant sur la surface de bande de roulement de la partie bande de roulement (2) dans une direction de la largeur de rainure.

7. Pneumatique (1) selon l'une quelconque des revendications 1 à 6, dans lequel une quantité de soufre de la composition de caoutchouc est égale ou supérieure à 1,2 % en masse.

8. Pneumatique (1) selon l'une quelconque des revendications 1 à 7, dans lequel une quantité totale de styrène S dans le composant de caoutchouc est inférieure ou égale à 12 % en masse.

9. Pneumatique (1) selon l'une quelconque des revendications 1 à 8, dans lequel le module complexe élastique à 0 °C (E*à 0 °) de la composition de caoutchouc est égal ou supérieur à 8,0 MPa.

10. Pneumatique (1) selon l'une quelconque des revendications 1 à 9, dans lequel une dureté de caoutchouc Hs de la composition de caoutchouc est supérieure à 68, dans lequel la dureté est mesurée par un duromètre de type A à 23 °C selon la norme JIS K 6253.

11. Pneumatique (1) selon l'une quelconque des revendications 1 à 10, dans lequel la température de transition vitreuse de la composition de caoutchouc est inférieure à -25 °C, dans lequel une courbe de distribution de la température de tan $\delta$ est mesurée dans une condition de fréquence de 10 Hz, une contrainte initiale de 10 %, une contrainte dynamique de $\pm$ 0.5 % et un gradient de température de 2 °C/min, et la température correspondant à la valeur de tan $\delta$ la plus grande est égale ou supérieure à -60°C et inférieure ou égale à 40 °C dans la courbe de distribution de température obtenue est déterminée comme étant la température de transition vitreuse.

12. Pneumatique (1) selon l'une quelconque des revendications 1 à 11, dans lequel la teneur totale de la charge sur la base de 100 parties en masse de composant de caoutchouc est supérieure à 10 parties en masse et inférieure à 70 parties en masse.

13. Pneumatique (1) selon l'une quelconque des revendications 1 à 12, dans lequel une charge comprend du noir de carbone ayant une taille particulaire primaire moyenne inférieure ou égale à 27 nm.

14. Pneumatique (1) selon l'une quelconque des revendications 1 à 13, dans lequel le ratio de tan $\delta$ à 70 °C sur W (tan $\delta$ à 70 °C/W) est supérieur à 0,0009 et inférieur à 0,0050.

15. Pneumatique (1) selon l'une quelconque des revendications 1 à 14, dans lequel la partie bande de roulement (2) est pourvue d'au moins une rainure circonférentielle (3) s'étendant de manière continue dans une direction circonférentielle de pneumatique, et au moins une paroi de rainure de la rainure circonférentielle (3) est pourvue d'une partie en retrait (10) étant en retrait sur le côté extérieur du bord de rainure (6) apparaissant sur la surface de bande de roulement de la partie bande de roulement (2) dans une direction de la largeur de rainure, et la profondeur de la rainure dans la partie la plus profonde (11) de la rainure circonférentielle (3), laquelle rainure circonférentielle (3) est pourvue de la partie en retrait (10) étant en retrait sur le côté extérieur du bord de rainure (6) apparaissant sur la surface de bande de roulement de la partie bande de roulement (2) dans la direction de la largeur de rainure, est supérieure à 8,0 mm et inférieure à 19,0 mm.

# FIG. 1

# FIG. 2

# FIG. 3

# FIG. 4

**REFERENCES CITED IN THE DESCRIPTION**

**Patent documents cited in the description**

- JP 2005212742 A

- WO 2022045078 A1